# FASCICULE DE BREVET EUROPEEN

(11) **EP 1 745 419 B1**
(45) Date de publication et mention de la délivrance du brevet: **06.09.2017**
(21) Numéro de dépôt: 05747071.8
(22) Date de dépôt: 14.04.2005
(51) Int. Cl.: G06K 19/02, B42D 25/305, G06K 19/077

(54) **STRUCTURE COMPORTANT UN DISPOSITIF ÉLECTRONIQUE, NOTAMMENT POUR LA FABRICATION D'UN DOCUMENT DE SÉCURITÉ OU DE VALEUR**
STRUKTUR MIT EINER ELEKTRONISCHEN EINRICHTUNG INSBESONDERE ZUR HERSTELLUNG EINES SICHERHEIT- ODER WERTDOKUMENTS
STRUCTURE COMPRISING AN ELECTRONIC DEVICE PARTICULARLY FOR THE PRODUCTION OF A SECURITY OR VALUE DOCUMENT

(30) Priorité: 14.04.2004 FR 0403908
(43) Date de publication de la demande: 24.01.2007
(60) Demande divisionnaire: 10176339.9
(73) Titulaire: ARJO SYSTEMS, 92100 Boulogne Billancourt (FR)
(72) Inventeur: RANCIEN, Sandrine, 38140 La Murette (FR); VICENTINI, Frédéric, 94370 Sucy-en-Brie (FR)
(74) Mandataire: Andrieux, Benoît
(86) Numéro de dépôt international: PCT/FR2005/050240
(87) Numéro de publication internationale: WO 2005/100021

(56) Documents cités:
- EP-A1- 1 271 398
- WO-A-02/082126
- WO-A-02/089052
- WO-A1-01/41061
- FR-A- 2 840 431
- US-A- 4 428 997
- US-A- 5 528 222
- US-A1- 2003 136 503

## Description

La présente invention a pour objet une structure comportant un dispositif électronique, par exemple RFID (Dispositif d'Identification Radio Fréquence), notamment pour la fabrication d'un document de sécurité ou de valeur ou la sécurisation d'un article. Le dispositif électronique peut permettre d'échanger des données sans contact.

Par sécurisation d'un article, on entend le fait de munir un article, qui peut être par exemple un dispositif de conditionnement, d'un dispositif électronique capable par exemple de servir d'antivol ou de moyen d'authentification ou de traçage.

On connaît par la demande de brevet GB 2 279 907 une carte à puce réalisée en assemblant des couches inférieure et supérieure avec une structure centrale portant un dispositif électronique, lequel comprend un circuit intégré et une bobine reliée au circuit. Pour réaliser cette structure centrale, le dispositif électronique est pris en sandwich entre deux couches en polyester recouvertes chacune sur une face d'un adhésif thermo-activable. Cette structure centrale est elle-même prise en sandwich entre deux couches inférieure et supérieure en PVC. L'assemblage des couches constitutives de la structure centrale avec le dispositif électronique ainsi que celui de la structure centrale avec les couches inférieure et supérieure a lieu lors de la fabrication de la carte. Sous l'action de la pression et de la température, le dispositif électronique s'enfonce dans les couches adjacentes, ce qui permet de compenser son épaisseur tandis que les différentes couches se lient entre elles. Cette demande de brevet ne décrit pas une structure centrale pré-assemblée.

On connaît par le brevet US 6 305 609 une carte à puce réalisée en assemblant des couches inférieure et supérieure avec une structure centrale portant un dispositif électronique. Cette structure centrale comporte un film de support portant le dispositif électronique, lequel comprend un circuit intégré et une bobine reliée à ce circuit. Ce dispositif fait saillie de part et d'autre du film de support. Les parties en saillie sont compensées en épaisseur grâce à un liquide thermoplastique réticulé sous rayonnement UV. Ce liquide est introduit au dernier moment lors de l'assemblage de la structure centrale avec les couches inférieure et supérieure précitées. Ces dernières ainsi que le film de support sont en matière thermoplastique. Ce type de structure centrale qui présente des surépaisseurs nécessite un équipement spécifique pour l'assemblage final dans la carte ou par exemple entre deux couches inférieure et supérieure de nature fibreuse.

On connaît par le brevet US 6 233 818 une carte à puce réalisée en assemblant des couches inférieure et supérieure avec une structure centrale portant un dispositif électronique. Cette structure centrale comporte un film de support en matière thermoplastique avec une fenêtre dans laquelle est placé le dispositif électronique, lequel comprend un module avec un circuit intégré et une bobine en cuivre qui est connectée à ce circuit et insérée à la surface du film via un procédé à ultrasons. Le film, en PVC, PC ou PET-G, est ensuite directement laminable avec des couches inférieure et supérieure imprimées pour la fabrication de la carte à puce sur un équipement spécifique générant pression et température.

La manipulation d'une telle structure est délicate car l'antenne est à fleur de la structure.

De plus, ce type de structure n'est pas adapté à une intégration directe entre la couverture d'un passeport et le livret de feuilles par exemple, les colles de reliure actuellement utilisées étant appliquées à froid et sous forme liquide.

On connaît par ailleurs par la demande WO 00/42569 une étiquette réalisée en déposant successivement sur un papier recouvert de silicone les couches suivantes :
- une couche d'adhésif réticulable sous l'effet d'un rayonnement UV,
- une couche d'un matériau électriquement conducteur formant des pattes de connexion,
- une couche d'un matériau diélectrique,
- une couche d'une encre métallique conductrice de manière à former une antenne,
- une couche expansible contenant une résine polymérique et comportant une fenêtre.

Un dispositif électronique est introduit dans la fenêtre de la couche expansible, au contact de l'antenne. Dans cette demande, il n'y a pas de structure centrale pré-assemblée. La couche expansible comporte une réserve au niveau de la puce pour éviter les surépaisseurs. Dans le cas d'une étiquette ainsi réalisée, il est relativement facile de peler l'étiquette de son support après application, ceci sans évidence de falsification. Enfin, une telle construction ne permet pas de camoufler le dispositif électronique, c'est-à-dire la puce et son antenne, lors d'une observation en lumière transmise.

La demande internationale WO 02/089052 décrit un passeport dont la couverture est munie d'un dispositif d'identification radiofréquence.

Cette couverture peut comporter une première feuille portant le dispositif radiofréquence, une deuxième feuille pourvue d'un trou et une troisième feuille en papier, les trois feuilles étant contrecollées et la puce venant se loger dans le trou.

La demande internationale WO 02/082126 décrit un document autocollant comportant une puce électronique reliée à une antenne. Celle-ci est réalisée par impression d'une encre conductrice sur une couche adhésive.

Le brevet US 5 528 222 décrit une structure comportant un dispositif RFID porté par un substrat flexible sur lequel est fixée une antenne, le substrat et le dispositif RFID étant recouverts de part et d'autre par deux couches d'adhésif.

La demande US 2003/0136503 décrit un procédé de fabrication d'un article à partir d'un support comportant une pluralité de dispositifs RFID et d'antennes.

Le brevet européen EP 0 742 926 B1 décrit un support de données tel une carte à circuit intégré à une ou plusieurs couches dans laquelle est encastré un module électronique. Les couches de la carte sont en papier et/ou en carton et sont liées les unes aux autres par des adhésifs.

La demande de brevet européenne EP 1 271 398 A1 décrit une étiquette de sécurité multi-couches comprenant un RFID, une couche adhésive provoquant la destruction du RFID en cas de décollage.

La demande internationale WO 01/41061 A1 décrit un procédé de fabrication d'une carte à puce avec un support d'antenne en matériau fibreux.

La société SMARTRAC commercialise des structures appelées « Prelaminated Inlays» comprenant des couches en polycarbonate ou PET, destinées à être intégrées dans un document de sécurité. La société AONTEC commercialise également des structures appelées « Prelaminated Inlays » destinées à être laminées avec des couches d'un document de sécurité, ces structures comprenant des couches en PVC ou PC.

Ces structures n'offrent pas entière satisfaction sur le plan de la sécurité et de l'assemblage avec des couches inférieure et supérieure fibreuses.

L'invention vise notamment à proposer, selon l'un de ses aspects, une structure comportant un dispositif électronique qui rende plus difficile, voire impossible, toute tentative de falsification d'un article ou d'un document de sécurité ou de valeur comportant une telle structures, et qui puisse être facilement assemblée avec l'article ou le reste du document.

L'invention a ainsi pour objet une structure selon la revendication 1.

La couche intercalaire peut être blanche ou colorée.

La structure selon l'invention peut par exemple être utilisée pour la réalisation d'un document d'identité, par exemple un passeport, ou d'une étiquette de visa.

Par « dispositif électronique », on désigne tout dispositif permettant de mémoriser et/ou d'échanger des informations, notamment par une liaison sans fil. Le dispositif électronique peut notamment être in dispositif RFID. Le dispositif électronique peut comporter une antenne, laquelle peut se présenter par exemple sous la forme d'une bobine, filaire ou imprimée. Le dispositif électronique peut présenter ou non des contacts électriques apparents depuis l'extérieur de la structure.

Grâce à l'invention, la structure peut être dépourvue de surépaisseur sensible si on le souhaite, le dispositif électronique pouvant être entièrement logé dans la fenêtre de la couche intercalaire. Ainsi, la structure peut aisément être assemblée, au choix, avec différents types de documents de sécurité, sans être dotée d'un élément spécifique pour compenser l'épaisseur du dispositif électronique, comme cela est le cas par exemple pour la carte à puce décrite dans le brevet US 6 305 609 précité.

La structure selon l'invention présente encore l'avantage qu'une tentative de falsification de celle-ci s'avère relativement difficile, voire impossible, car la couche intercalaire est aisément altérée en cas de tentative de pelage de la structure, ce qui pourrait ne pas être le cas pour un document de sécurité ou de valeur réalisé avec une structure centrale telle que décrite par exemple dans le brevet US 6 233 818 ou dans la demande WO 00/42569.

De plus, du fait que le dispositif électronique est logé au moins partiellement dans une fenêtre de la couche intercalaire, le dispositif électronique est protégé contre des chocs mécaniques.

La couche adjacente de la structure précitée est par exemple une couche intercalaire supplémentaire, une couche de masquage ou un support du dispositif électronique, cette liste n'étant pas limitative.

Lorsque la structure est destinée à la fabrication d'une étiquette, de visa par exemple, la couche d'adhésif précitée est avantageusement recouverte d'un film anti-adhérent de protection, amovible.

Dans une réalisation particulière, la structure comporte au moins une couche fibreuse extérieure destinée à être assemblée avec une couche fibreuse du document de sécurité ou de valeur.

Ainsi, la structure peut être assemblée avec au moins une couche fibreuse du document de sécurité ou de valeur de manière relativement aisée, notamment sans utilisation d'adhésif particulier ni mise en place de conditions de laminations particulières telles que celles habituellement rencontrées dans la fabrication de cartes à puces (temps de lamination 30 mn à 150 °C), et en limitant les problèmes de curl puisque les couches fibreuses à assembler de la structure et du document sont de nature similaire ou compatible.

Avantageusement, la couche intercalaire est entièrement fibreuse, ce qui peut faciliter par exemple l'incorporation dans celle-ci d'éléments de sécurité et ce qui peut faciliter également sa délamination en cas de tentative de falsification.

Dans un exemple de mise en oeuvre de l'invention, l'une au moins de la nature et de l'épaisseur de la couche intercalaire est choisie de manière à ce que la couche intercalaire soit opaque en lumière transmise. Ainsi, la couche intercalaire peut permettre de masquer au moins partiellement le dispositif électronique lorsque la structure est observée en lumière transmise.

La couche intercalaire peut en outre être agencée pour réfléchir la lumière, ce qui permet de masquer également au moins partiellement le dispositif électronique lorsque la structure est observée en lumière réfléchie ou transmise.

Comme indiqué plus haut, la couche intercalaire peut être blanche ou, en variante, être colorée. La couche intercalaire peut comporter une âme colorée avec un revêtement blanc.

Lorsque la couche intercalaire est colorée, le ou les colorants et/ou pigments présents dans la couche intercalaires sont de préférence retenus dans la couche intercalaire avec une force suffisante pour éviter une migration du ou des colorants ou pigments dans des couches adjacentes de la structure et/ou du document de sécurité ou de valeur sur lequel la structure est assemblée.

La couche intercalaire peut être métallisée ou laminée avec au moins un film métallique, ce qui peut permettre de l'opacifier tout en veillant à ne pas perturber le fonctionnement en écriture/lecture du dispositif électronique.

De préférence, la fenêtre traverse la couche intercalaire mais en variante la fenêtre est non traversante.

Dans un exemple de mise en oeuvre de l'invention, la structure est agencée de manière à permettre de détecter sur le document de sécurité ou de valeur, à travers la fenêtre de la couche intercalaire, visuellement, éventuellement sous un éclairage particulier, ou à l'aide d'un dispositif de détection, un élément de sécurité porté par la structure, cet élément de sécurité pouvant notamment être présent sur le dispositif électronique, par exemple sous la forme d'une inscription ou d'un revêtement tel que par exemple un vernis. La structure peut par exemple comporter un revêtement thermochromique détectable sur le document de sécurité ou de valeur à travers la fenêtre.

De préférence, la structure, notamment l'une au moins de la couche intercalaire, d'une éventuelle couche de masquage et de la couche d'adhésif, comporte au moins l'un des éléments de sécurité suivants : un élément d'authentification, un élément de mise en évidence d'une falsification, ce ou ces éléments de sécurité étant visibles et/ou détectables à l'aide d'un dispositif de détection.

La structure, notamment l'une au moins de la couche intercalaire, d'une éventuelle couche de masquage de la structure et de la couche d'adhésif, comporte avantageusement au moins un élément de sécurité choisi parmi : un élément à effet optique variable et/ou diffractif comme par exemple un élément holographique, iridescent ou à cristaux liquides, un revêtement magnétique ou cristallin, des fibres magnétiques, des traceurs détectables par résonance magnétique, des traceurs détectables par fluorescence X, une impression d'un vernis ou d'un encre, des traceurs luminescents ou fluorescents, des composés photochromiques, thermochromiques, électroluminescents et/ou piézochromiques et/ou qui changent de couleur au contact d'un ou de plusieurs produits chimiques prédéterminés, notamment des acides, bases ou oxydants ou solvants.

Avantageusement, la fenêtre et/ou la couche intercalaire présente une forme imitant une image, un logo ou une inscription, de manière à définir une sécurité supplémentaire de la structure et du document équipé de la structure. La fenêtre peut ainsi être non rectangulaire, par exemple.

Dans un exemple de mise en oeuvre de l'invention, le dispositif électronique comporte un support portant une puce électronique et une antenne connectée à la puce électronique, la puce électronique s'étendant au moins partiellement dans la fenêtre de la couche intercalaire. L'antenne permet d'apporter une alimentation électrique à la puce électronique et de lire et/ou d'écrire des données, sans contact, dans la puce. Cette dernière peut comporter un ou plusieurs circuits intégrés, notamment une mémoire.

Le support peut être flexible. Le support peut être réalisé à base d'un matériau minéral ou organique, naturel ou synthétique, par exemple être une couche fibreuse, notamment une couche de papier.

Le support peut encore être réalisé par exemple en un matériau contenant un polymère, notamment du PET. Le support peut en variante être réalisé en PVC, ABS/PC, PC, PA, polyimide, PE, PP ou verre époxy, cette liste n'étant pas limitative.

La puce électronique fixée sur le support peut être encapsulée ou non dans une résine. L'antenne peut être de type filaire ou être gravée, imprimée ou réalisée par estampage, voire à l'aide d'un procédé de croissance électrolytique. L'antenne peut s'étendre au moins en partie sur la puce. Lorsque l'antenne est filaire, elle est avantageusement maintenue par une couche d'un adhésif, laquelle peut servir à assembler deux couches de la structure. La couche d'adhésif présente alors avantageusement une épaisseur supérieure à celle du fil de l'antenne.

Le support peut comporter sur une face un revêtement contenant un élément de sécurité tel que par exemple un composé thermochrome irréversible qui change de couleur, par exemple passe de l'incolore à une couleur prédéfinie, par exemple rose ou rouge, lorsque la température dépasse une valeur prédéfinie, par exemple environ 65 °C. Cela permet de révéler une attaque thermique de la structure.

Dans un exemple de mise en oeuvre de l'invention, le support est pris en sandwich entre deux couches de la structure. Dans ce cas, la structure peut comporter une unique couche intercalaire.

En variante, la structure peut comporter au moins une couche intercalaire supplémentaire dans laquelle est logé au moins partiellement le support du dispositif électronique. Celui-ci peut comporter un module avec par exemple une partie de connexion destinée à être connectée à une antenne et une puce électronique noyée dans une résine d'encapsulage.

La couche intercalaire supplémentaire peut comporter une fenêtre logeant au moins partiellement la partie de connexion du module, la résine d'encapsulage étant logée dans la fenêtre de l'autre couche intercalaire. L'antenne du dispositif électronique peut être portée le cas échéant par cette couche intercalaire supplémentaire.

En variante, le dispositif électronique peut être couplé à une seconde antenne qui jouera le rôle d'amplificateur, par exemple en augmentant la portée, cette seconde antenne pouvant être portée le cas échéant par couche intercalaire supplémentaire ou une couche adjacente.

Lorsque la structure comporte plusieurs couches intercalaires comportant chacune une fenêtre, les différentes fenêtres peuvent présenter des formes et des dimensions différentes, afin par exemple de s'adapter à la forme du dispositif électronique. La protection de ce dernier contre les chocs peut ainsi être renforcée.

Lorsque la structure comporte deux couches intercalaires, l'une d'elles peut comporter une fenêtre plus petite que celle de l'autre couche intercalaire.

Le dispositif électronique peut comporter, notamment lorsqu'il constitue un module, deux portions de largeurs différentes, la portion avec la plus petite largeur étant reçue dans la plus petite fenêtre et la portion avec la plus grande largeur dans la plus grande fenêtre.

La couche intercalaire avec la plus petite, respectivement la plus grande, fenêtre peut présenter une épaisseur sensiblement égale à celle de la portion du dispositif électronique avec la plus petite, respectivement la plus grande, largeur.

Le dispositif électronique peut comporter une antenne, par exemple gravée ou filaire, disposée entre les deux couches intercalaires. Le dispositif électronique peut notamment comporter une antenne disposée sur sa portion de plus grande largeur.

L'adhésif utilisé entre les deux couches intercalaires peut ne pas être un adhésif sensible à la pression, pour faciliter le positionnement précis des deux couches intercalaires l'une par rapport à l'autre. Il est possible par exemple de maintenir provisoirement les deux couches ensemble en réalisant, dans un adhésif activable à chaud, présent entre les deux couches, des points de fusion, par exemple par l'application localisée d'ultrasons avant assemblage définitif.

En variante, les fenêtres des deux couches présentent des tailles identiques.

La structure peut présenter une épaisseur maximale d'environ 500 µm, par exemple.

Dans un exemple de mise en oeuvre de l'invention, la structure comporte au moins une couche de masquage disposée au moins au droit d'une fenêtre d'une couche intercalaire, de manière à masquer au moins partiellement le dispositif électronique lorsque la structure est observée en lumière transmise et/ou en lumière réfléchie. Ainsi, la structure peut présenter une sécurité accrue vis-à-vis de la contrefaçon, rendant plus difficile une tentative de reproduction de la structure.

La couche de masquage peut être blanche ou colorée. La couche de masquage peut comporter une âme colorée avec un revêtement blanc.

La couche de masquage peut être métallisée ou laminée avec au moins un film métallique.

La couche de masquage peut être une couche fibreuse ou non.

Dans un exemple de mise en oeuvre de l'invention, la couche d'adhésif est choisie pour permettre un assemblage à froid ou à chaud de la couche intercalaire avec une couche adjacente de la structure ou avec une couche adjacente d'un document de sécurité ou de valeur dans ou sur lequel la structure est intégrée ou fixée.

L'adhésif peut être un adhésif thermoplastique ou thermodurcissable, un élastomère ou l'un de leurs mélanges.

L'adhésif peut être réticulé, le cas échéant, pour augmenter ses performances, notamment en ce qui concerne la résistance mécanique ou thermique ou aux produits chimiques.

L'adhésif peut se présenter sous forme solide lorsqu'il s'agit d'un adhésif thermofusible dit hotmelt qui lors de sa mise en oeuvre passera à l'état liquide par chauffage.

L'adhésif peut, en variante, être sous forme d'un liquide en milieu solvant ou aqueux ou comporter 100 % de matière adhésive.

L'adhésif peut, dans une autre variante encore, être sous forme d'un film transfert d'adhésif sensible à la pression et/ou activable à la chaleur.

Un film adhésif sans adhésion instantanée, activable à chaud, est avantageux pour pouvoir faciliter le positionnement des différentes couches lors de la fabrication, avant assemblage définitif.

L'adhésif sous forme d'un film peut être renforcé, le cas échéant, par une couche fibreuse, tissée ou non-tissée.

Le durcissement de l'adhésif peut être obtenu par exemple par évaporation de solvant ou de l'eau, par activation avec un solvant ou avec la chaleur, par polymérisation dans le cas d'une colle chimiquement réactive, par refroidissement dans le cas d'une colle thermofusible déposée à chaud.

Dans certains cas, les matériaux à assembler avec les adhésifs choisis seront soumis à une pression, avec ou sans apport de chaleur, pour augmenter la cohésion du collage.

Un film d'adhésif activable à chaud peut par exemple être à base d'un polymère ou copolymère, par exemple à base de polyéthylène modifié, d'un éthylène vinyl acétate, d'un polybutylacrylate, d'un polyuréthane réticulable ou d'un mélange de caoutchouc nitrile et de résine époxy.

Un film d'adhésif sensible à la pression peut par exemple être à base d'acrylique réticulable ou réticulé.

Un adhésif liquide durcissable par évaporation peut par exemple être à base d'acrylique ou de polyuréthane, modifié ou non.

La couche d'adhésif peut être colorée de manière à masquer au moins partiellement le dispositif électronique lorsque la structure est observée en lumière transmise et/ou réfléchie.

De préférence, l'adhérence entre deux couches adjacentes de la structure est supérieure à la cohésion interne de l'une au moins desdites couches. La cohésion interne d'une couche correspond notamment à sa capacité de résister à une délamination interne. Ainsi, une tentative de séparation d'une des couches de la structure provoque l'altération de celle-ci.

Dans un exemple de mise en oeuvre de l'invention, la structure comportant deux couches intercalaires, l'une de celles-ci présente une cohésion interne inférieure à celle de l'autre couche intercalaire.

La couche intercalaire présente avantageusement une cohésion interne inférieure ou égale à celle de la couche de masquage éventuellement présente.

Lorsque le dispositif électronique comporte un support, la cohésion interne du support peut être inférieure ou égale à celle de la couche intercalaire. Ainsi, la structure procure une sécurité contre une tentative de falsification pour tenter d'isoler le dispositif électronique par déchirure ou délamination entre la couche intercalaire et la couche de masquage ou entre la couche intercalaire et le support, notamment si ce dernier présente les mêmes dimensions que la couche intercalaire.

La structure peut comporter un film anti-adhérent, destiné à être enlevé lorsque la structure doit être collée sur un document ou un objet, tel que par exemple un conditionnement.

La structure peut être revêtue sur ses deux faces opposées d'une couche d'un adhésif. Chaque couche d'adhésif peut être protégée par un film anti-adhérent amovible de protection, notamment lorsque l'adhésif est sensible à la pression. Lorsque l'adhésif n'est pas sensible à la pression, étant par exemple activable à chaud, un film anti-adhérent peut ne pas être nécessaire.

La structure, notamment lorsqu'elle comporte un film anti-adhérent de protection de la couche d'adhésif, peut constituer un visa destiné à être collé sur une feuille de passeport.

La structure peut comporter un élément de sécurité visible sur sa tranche.

La présence d'une couche fibreuse, notamment de papier, par exemple intercalaire ou de masquage, sur la face extérieure de la structure est avantageuse car une telle couche peut être compatible avec des colles liquides, notamment à base d'eau, par exemple celles susceptibles d'être utilisées dans la fabrication de passeports.

De plus, une couche fibreuse peut plus facilement être formulée pour être faiblement cohésive et être altérée en cas de tentative de délamination de la structure ou de séparation de la structure d'une couverture de passeport avec laquelle la structure est assemblée, et donc servir de preuve de manipulation frauduleuse.

Il est possible en outre d'incorporer dans la couche fibreuse des éléments de sécurité.

Cette couche fibreuse peut être relativement fine, avec une densité par exemple inférieure ou égale à 100 g/m², éventuellement inférieure ou égale à 70 g/m².

La structure selon l'invention peut être souple.

L'invention a encore pour objet un document de sécurité ou de valeur comportant une structure telle que définie plus haut ou constitué par une telle structure, ce qui peut être le cas notamment lorsque le document est un visa.

Le document de sécurité peut constituer de préférence un document d'identité, une étiquette visa ou un livret de passeport, par exemple, cette liste n'étant pas limitative. Le document de valeur peut constituer un moyen de paiement

Le document peut comporter une couche réceptrice destinée à être assemblée avec la structure et la cohésion interne de cette couche est de préférence supérieure à celle de la couche intercalaire de la structure et éventuellement celle de la couche de masquage de la structure, destinée à être assemblée avec la couche réceptrice du document.

Avantageusement, l'adhérence entre d'une part la couche réceptrice du document et d'autre part la couche intercalaire ou l'éventuelle couche de masquage, est supérieure à la cohésion interne de la couche intercalaire ou de l'éventuelle couche de masquage.

Une structure selon l'invention peut être destinée à être prise en sandwich entre deux couches fibreuses, notamment deux jets de papier.

L'invention a encore pour objet un procédé de fabrication d'une structure selon la revendication 33.

Le procédé peut comporter les étapes suivantes :
- déposer la couche d'adhésif sur la couche intercalaire,
- réaliser dans l'ensemble constitué par la couche intercalaire et la couche d'adhésif une fenêtre, de préférence traversante, notamment à l'aide d'un emporte-pièce ou d'un laser.

Le procédé peut encore comporter les étapes suivantes :
- fournir une couche d'adhésif sous la forme d'un film transfert par exemple sensible à la pression et/ou activalbe à la chaleur, cette couche d'adhésif étant initialement recouverte ou non par au moins un film anti-adhérent,
- retirer le film anti-adhérent de la couche d'adhésif, le cas échéant,
- assembler la couche d'adhésif avec la couche intercalaire.

En variante, le procédé comporte les étapes suivantes :
- déposer sur la couche intercalaire ou sur une éventuelle couche de masquage un adhésif sous forme liquide de manière à former une couche d'adhésif,
- éventuellement, recouvrir la couche d'adhésif ainsi formée d'un film anti-adhérent.

Lorsque la structure comporte deux couches intercalaires, le procédé peut comporter les étapes suivantes :
- réaliser séparément sur chacune des couches intercalaires au moins une fenêtre, de préférence traversante.

Lorsque la structure comporte une couche intercalaire en polymère adhésif et deux couches intercalaires fibreuses, le procédé peut comporter les étapes suivantes :
- assembler l'adhésif avec la couche intercalaire,
- réaliser dans l'ensemble une fenêtre traversante,
- réaliser une fenêtre traversante dans une autre couche intercalaire,
- assembler de manière repérée les deux couches intercalaires avec le dispositif électronique logé dans les fenêtres.

Le procédé peut comporter l'étape suivante :
- déposer une couche d'adhésif sur chacune des couches intercalaires,
- laminer à froid ou à chaud les différentes couches de la structure avec ou sans pression.

L'invention a encore pour objet un procédé pour réaliser un document de sécurité ou de valeur, caractérisé par le fait qu'il comporte les étapes suivantes :
- fournir une structure telle que définie ci-dessus, la structure étant pré-assemblée,
- assembler ladite structure avec le document de sécurité ou de valeur.

Ce procédé peut comporter l'étape suivante :
- laminer à froid ou à chaud la structure avec une couche du document de sécurité ou de valeur.

Le procédé peut comporter les étapes suivantes :
- déposer une couche d'adhésif sur la structure et/ou une couche du document de sécurité ou de valeur,
- assembler la structure avec le document de sécurité ou de valeur à l'aide de la couche d'adhésif.

En variante, le procédé peut comporter les étapes suivantes :
- traiter une surface extérieure de la structure de manière à la rendre adhésive et la recouvrir éventuellement de manière temporaire d'un film anti-adhérent,
- assembler la structure avec le document de sécurité ou de valeur en mettant en contact la face traitée de la structure avec le document.

Le procédé peut comporter l'étape suivante :
- coudre la structure avec au moins une feuille ou une couche du document de sécurité ou de valeur.

Avantageusement, la couture est réalisée sur un support du dispositif électronique de la structure, en dehors d'une antenne et d'une puce électronique.

Le procédé peut comporter les étapes suivantes :
- réaliser une impression ou le dépôt d'un élément de sécurité sur une couche du document avant assemblage avec la structure,
- assembler la structure avec ladite couche du document.

Ainsi, la structure est incorporée dans le document seulement lorsque le ou les couches du document sont correctement imprimées ou l'élément de sécurité correctement rapporté.

En variante, le procédé peut comporter les étapes suivantes :
- assembler la structure avec une couche du document,
- puis réaliser une impression ou le dépôt d'un élément de sécurité sur la couche du document

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, schématiquement et partiellement, une structure conforme à un exemple de mise en oeuvre de l'invention,
- la figure 2 représente, schématiquement et partiellement, en coupe transversale suivant II-II, la structure de la figure 1,
- la figure 3 représente, schématiquement et partiellement, en coupe transversale, un document de sécurité ou de valeur assemblé avec la structure de la figure 2,
- la figure 4 est une vue, schématiquement et partiellement, en coupe transversale, d'une structure conforme à un autre exemple de mise en oeuvre de l'invention,
- les figures 5 et 6 représentent, schématiquement et partiellement, en coupe transversale, deux documents de sécurité ou de valeur assemblés avec la structure de la figure 4,
- la figure 7 représente, schématiquement et partiellement, en coupe transversale, une structure conforme à un autre exemple de mise en oeuvre de l'invention,
- la figure 8 est une vue schématique et partielle, en coupe transversale, d'un document de sécurité ou de valeur avec la structure de la figure 7,
- les figures 9A et 9 représentent, schématiquement et partiellement, en coupe transversale, des structures conformes à d'autres exemples de mise en oeuvre de l'invention,
- la figure 10 représente, schématiquement et partiellement, en coupe transversale, un document de sécurité ou de valeur, avec la structure de la figure 9,
- la figure 11 représente, schématiquement et partiellement, en coupe transversale, une structure conforme à un autre exemple de mise en oeuvre de l'invention,
- la figure 12 représente, schématiquement et partiellement, en coupe transversale, un document de sécurité ou de valeur, avec la structure de la figure 11,
- la figure 13 représente, schématiquement et partiellement, une fenêtre d'une couche intercalaire conforme à l'invention, et
- la figure 14 illustre, schématiquement et partiellement, un document de sécurité conforme à l'invention avec une structure cousue dessus,
- la figure 15 représente, schématiquement et partiellement, un ensemble de feuilles et une structure destinés à être cousus ensemble pour former le document de la figure 14,
- la figure 16 représente, schématiquement et partiellement, en coupe transversale, une structure conforme à un autre exemple de mise en oeuvre de l'invention,
- la figure 17 représente, schématiquement et partiellement, en coupe transversale, un livret conforme à un exemple de mise en oeuvre de l'invention,
- la figure 18 représente, schématiquement et partiellement, des étapes du procédé de fabrication de la structure de la figure 17,
- les figures 19 et 20 représentent, schématiquement et partiellement, deux exemples de livret conformes à l'invention,
- la figure 21 représente, schématiquement et partiellement, un insert incorporant un dispositif électronique,
- les figures 22 à 24 représentent, schématiquement et partiellement, en coupe transversale, des structures conformes à l'invention, incorporant l'insert de la figure 21, et
- les figures 25 à 28 représentent, schématiquement et partiellement, en coupe transversale, différentes structures conformes à différents exemples de mise en oeuvre de l'invention.

Sur le dessin, les proportions relatives des différents éléments représentés n'ont pas toujours été respectées, dans un souci de clarté.

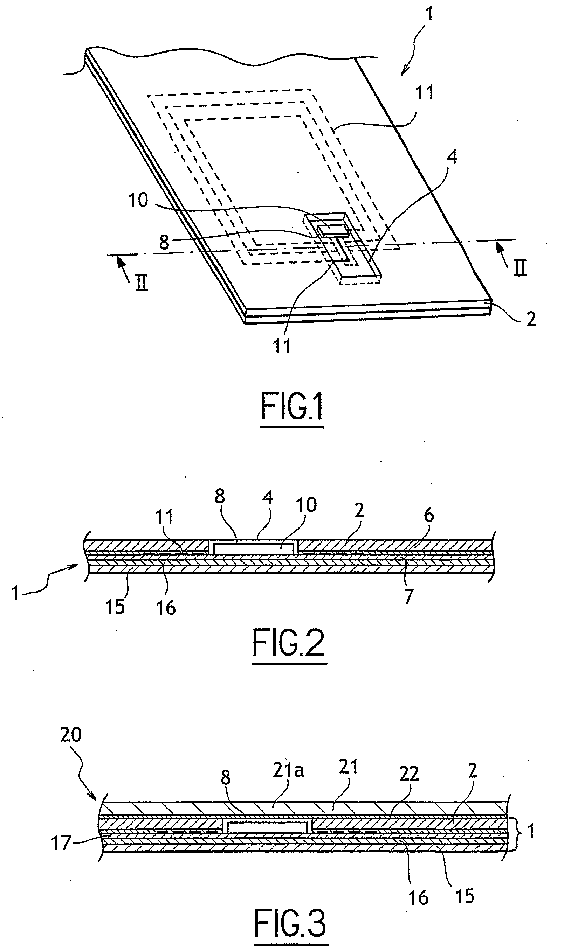

On a représenté sur la figure 1 une structure 1 conforme à l'invention destinée à la réalisation d'un document de sécurité ou de valeur.

La structure 1 comporte une couche intercalaire 2 comportant un orifice traversant définissant une fenêtre 4.

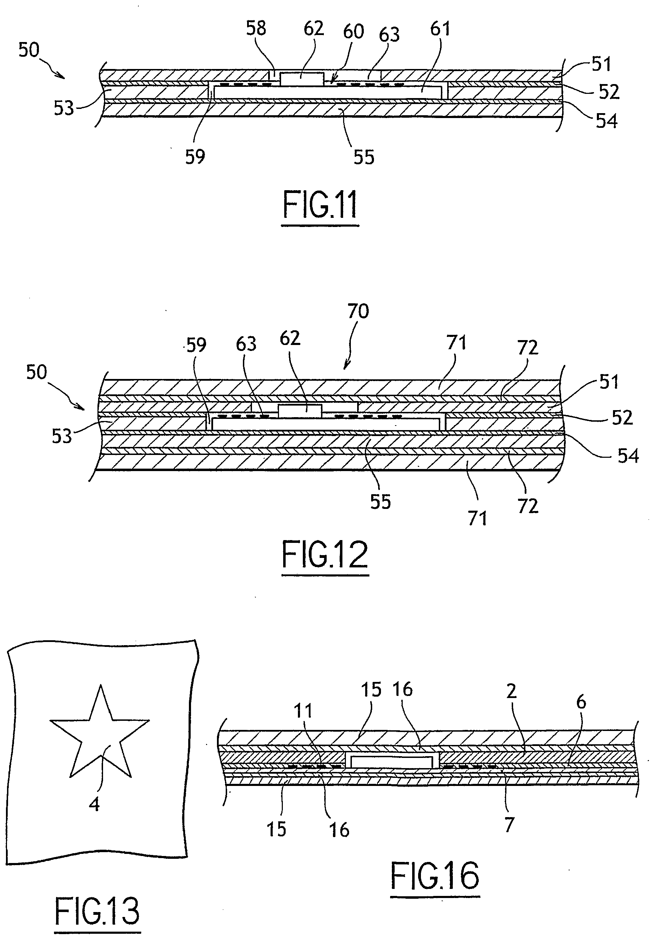

Dans l'exemple considéré, la fenêtre 4 présente une forme rectangulaire, mais on ne sort pas du cadre de la présente invention lorsque la fenêtre 4 présente une autre forme, ayant par exemple une forme en étoile, comme illustré sur la figure 13. D'une manière générale, la fenêtre 4 peut présenter une forme non circulaire ou rectangulaire imitant une image, un logo ou une inscription.

Dans l'exemple considéré, la couche intercalaire 2 est une couche fibreuse, notamment une couche de papier, par exemple avec une densité d'environ 215 g/m² et une épaisseur de 280 µm.

La couche intercalaire 2 peut incorporer un colorant, par exemple de type noir au soufre lui conférant une couleur noire, ce colorant présentant une fixation satisfaisante dans la couche intercalaire 2, ce qui évite une migration du colorant vers d'autres couches lorsque la couche intercalaire 2 est en contact avec un adhésif et/ou est soumis à une température élevée et/ou à une atmosphère humide.

La couche intercalaire 2 est, dans l'exemple considéré, opaque en lumière transmise et peut comporter un élément de sécurité détectable visuellement, éventuellement sous un éclairage prédéterminé, par exemple UV ou IR, ou, en variante, à l'aide d'un dispositif de détection prédéterminé, par exemple de détection du magnétisme.

Dans l'exemple considéré, la couche intercalaire 2 comporte des traceurs détectables avec un dispositif de détection adapté, par exemple des traceurs commercialisés par la société Microtag, détectables par résonance magnétique.

La couche intercalaire 2 peut présenter une cohésion d'une valeur d'environ 150 unités Scott, mesurée sur l'appareil Scott Bond.

La couche intercalaire 2 peut comporter tout autre élément de sécurité tel que par exemple : un élément à effet optique variable et/ou diffractif comme par exemple un élément holographique, iridescent ou à cristaux liquides, un revêtement magnétique ou cristallin, des fibres magnétiques, des traceurs détectables par résonance magnétique, des traceurs détectables par fluorescence X, une impression d'un vernis ou d'une encre, des traceurs luminescents ou fluorescents, des composés photochromiques, thermochromiques, électroluminescents et/ou piézochromiques et/ou qui changent de couleur en contact d'un ou plusieurs produits prédéterminés.

Comme illustré sur la figure 2, une couche d'adhésif 6 est déposée sur la face inférieure de la couche intercalaire 2, afin de permettre l'assemblage de celle-ci avec un support 7 d'un dispositif électronique 8 de type sans contact.

D'une manière générale, l'épaisseur de la couche intercalaire est supérieure ou égale, selon le cas, à celle de la puce nue, encapsulée ou à une partie d'un module comprenant la puce. La dimension de la fenêtre est supérieure ou égale, selon le cas, à celle de la puce nue, encapsulée ou à une partie du module comprenant la puce.

Dans l'exemple considéré, l'adhésif 6 est un adhésif sensible à la pression. En variante, l'adhésif 6 peut être de tout autre type, étant par exemple un adhésif sensible à la chaleur.

Dans l'exemple considéré, la couche d'adhésif 6 contient un adhésif permanent renfermant un solvant, par exemple de nature acrylique et présente une épaisseur d'environ 25 µm.

La couche d'adhésif 6 se présente initialement sous la forme d'un film de transfert et elle est laminée à froid sur la couche intercalaire 2.

Le pouvoir d'adhérence et la cohésion de la couche d'adhésif 6 sont supérieurs à la cohésion interne de la couche intercalaire 2.

Le dispositif électronique 8 comporte, outre le support 7, une puce électronique 10.

Dans l'exemple considéré, la puce 10 est une puce commercialisée sous la dénomination Picotag 16 KS par la société Inside et présente une forme carrée avec une section de 4 mm² environ et une épaisseur de 200 µm environ.

La puce 10 est connectée à une antenne 11, laquelle est en aluminium et gravée sur le support 7. Ce dernier comporte un film réalisé en PET transparent avec une épaisseur de 40 µm environ.

La puce 10 peut être réalisée à base de silicium ou, en variante, à base d'un polymère.

Le support 7 comporte sur une de ses faces un revêtement ou primer d'accrochage contenant un composé thermochrome irréversible qui change de couleur lorsque la température dépasse 65 °C, en passant par exemple de l'incolore au rose rouge.

La structure 1 comporte un film anti-adhérent 15 fixé au support 7 par l'intermédiaire d'une couche d'adhésif 16. Cette dernière est identique à la couche d'adhésif 6. Le film anti-adhérent 15 est destiné à être retiré avant l'assemblage de la structure sur un document ou un article.

On va maintenant décrire plus en détail les étapes de fabrication de la structure 1.

Tout d'abord, la couche d'adhésif 6 fixée sur un film anti-adhérent (non représenté) est laminée à froid sur la face inférieure de la couche intercalaire 2.

Un ouverture est réalisée dans l'ensemble constitué de la couche intercalaire 2, de la couche d'adhésif 6 et du film anti-adhérent, à l'aide d'une machine de découpe pourvue d'un emporte-pièce, cette ouverture étant destinée à former la fenêtre 4 de la structure 1.

Le film anti-adhérent est ensuite séparé.

La couche intercalaire 2 avec la couche d'adhésif 6 dessus, le support 7 avec l'antenne 11 dessus, la couche d'adhésif 16 et le film anti-adhérent 15 sont assemblés par laminage à froid sur une machine spécifique, la puce 8 venant se loger dans la fenêtre 4, sans déborder de celle-ci, comme on peut le voir sur les figures 1 et 2.

La structure 1 ainsi obtenue peut être utilisée pour la fabrication d'un document de sécurité.

On a représenté sur la figure 3 un document 20 tel qu'une étiquette de visa, comportant une couche fibreuse 21, en papier, cette couche 21 étant laminée à froid sur la face supérieure de la structure 1, par l'intermédiaire d'une couche d'adhésif 22 sensible à la pression.

Le document 20 peut en outre recevoir un élément de sécurité, par exemple un patch holographique, une encre réactive à des solvants apolaires, une encre thermochromique irréversible changeant de couleur lorsque la température atteint 65 °C, ces éléments de sécurité étant réalisés de préférence en dehors de la portion 21a de la couche 21 située en regard de la fenêtre 4 de la structure 1.

La couche fibreuse 21 peut comporter d'autres éléments de sécurité tels que des fibres de sécurité visibles colorées fluorescentes, des planchettes invisibles fluorescents pour l'authentification et des réactifs chimiques tels que les réactifs aux acides, bases, oxydants et solvants polaires pour prévenir toute tentative de falsification aux produits chimiques.

Le document 20 peut ainsi présenter les avantages suivants :
- une sécurité au niveau de l'authentification :
   - une sécurité de premier niveau : fibres visibles, fenêtre par exemple en forme d'étoile visible en lumière transmise,
   - une sécurité de deuxième niveau : planchettes et fibres fluorescentes détectables sous éclairage UV de longueur d'onde de 365 nm,
   - une sécurité de troisième niveau : sécurité Microtag détectable avec un dispositif de détection,
- une sécurité au niveau de la protection contre une falsification :
   - contre les attaques chimiques : réactifs dans le papier donnant une tache colorée visible à la surface de l'étiquette, lors d'attaques chimiques. Ces attaques chimiques peuvent survenir lors de tentatives d'effacement d'inscriptions présentes sur la surface imprimée du visa ou lors de tentatives d'enlèvement du visa appliqué sur un passeport ou encore lors de tentative d'ouverture du visa pour récupérer le dispositif électronique,
   - contre les attaques thermiques : les tentatives d'enlèvement du visa avec le dispositif électronique après application sur un papier passeport (pelage amorcé entre passeport et couche intercalaire) entraînent un changement de couleur du composé thermochrome au niveau du support du dispositif électronique, ce changement de couleur étant visible en réflexion et surtout en transmission au niveau de la fenêtre 4 de la couche intercalaire 2, les tentatives de récupération du papier de sécurité imprimé (pelage entre papier de sécurité et couche intercalaire) engendrent l'apparition d'un motif coloré au niveau de l'impression réalisée avec une encre thermochromique à la surface du papier de sécurité qui rend gênante toute utilisation frauduleuse,
   - contre les attaques mécaniques, sans apport de température : les tentatives d'enlèvement du visa avec le dispositif électronique après application sur un papier passeport (pelage amorcé entre passeport et couche intercalaire) entraînent une délamination de la couche intercalaire dont une partie va rester sur le papier passeport et l'autre sur l'étiquette, il est donc difficile de réutiliser le visa dans son intégralité. Si toutefois l'étiquette est collée sur un autre passeport, il y aura de toute façon, lors d'un contrôle, une perte du signal de détection des traceurs Microtag puisqu'il manque une partie de la couche intercalaire dans l'étiquette. Les tentatives de récupération du papier de sécurité imprimé seul (pelage entre papier de sécurité et couche intercalaire) entraînent une délamination de la couche intercalaire ou du visa. Si la couche intercalaire est délaminée, le motif visible en transmission au niveau de la fenêtre a de grandes chances d'être altéré et il y a évidence de falsification.

Par ailleurs, le dispositif électronique 8 n'est pas visible en lumière transmise en dehors de la fenêtre 4, ce qui améliore l'esthétique du document 20 et des motifs imprimés sur celui-ci.

La structure peut présenter une forme différente.

On a représenté sur la figure 16 une structure 1' se différenciant de la structure 1 précédemment décrite par le fait qu'elle comporte sur chaque face de la couche intercalaire 2 une couche d'adhésif 16. Chaque couche d'adhésif 16 est recouverte d'un film anti-adhérent 15 pouvant être retiré lors de l'assemblage de la structure 1' sur un document ou un article.

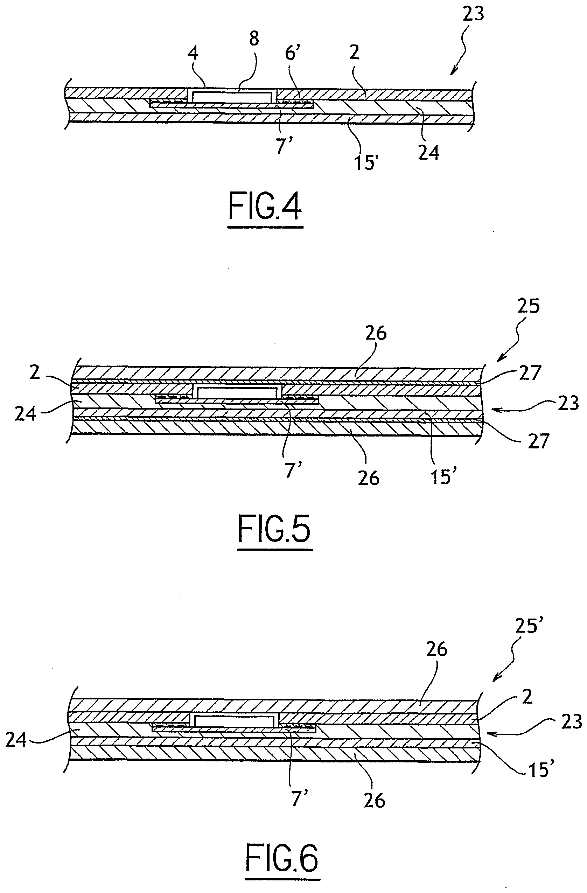

On a représenté sur la figure 4 une structure 23 destinée à la réalisation d'un document de sécurité conforme à un autre exemple de mise en oeuvre de l'invention.

La structure 23 comporte :
- une couche intercalaire 2 comme décrit ci-dessus,
- une couche d'adhésif 6' s'étendant seulement autour de la fenêtre 4 de la couche intercalaire 2, et non sur une face entière de cette couche intercalaire 2,
- un support 7' du dispositif électronique 8, ce support 7' s'étendant seulement sur une partie de la couche intercalaire 2, au droit de la couche d'adhésif 6',
- une couche d'adhésif 24 s'étendant sur toute la face inférieure de la couche intercalaire 2,
- une couche de masquage 15'.

La structure 23 peut être incorporée dans un document de sécurité 25 comme illustré sur la figure 5, étant laminée entre deux couches de papier 26 par l'intermédiaire de deux couches d'adhésifs 27. Ces dernières peuvent comporter un adhésif sensible à la chaleur.

Dans l'exemple considéré, la couche intercalaire 2 présente une cohésion interne inférieure ou égale à celle de la couche de papier 26 sur laquelle la couche 2 est assemblée. Ainsi, une tentative de décollement de la couche de papier pourra entraîner une délamination de la couche intercalaire 2.

Toujours dans l'exemple considéré, la couche de masquage 15' présente une cohésion interne inférieure ou égale à celle de la couche de papier 26 adjacente. L'adhérence entre la couche intercalaire 2 et la couche de masquage 15', entre la couche intercalaire 2 et la couche 26 adjacente, et entre la couche de masquage 15' et la couche de papier 26 adjacente, est supérieure à la cohésion de la couche intercalaire 2 et à celle de la couche de masquage 15'. La couche intercalaire 2 et la couche de masquage 15' présentent des cohésions similaires. La couche d'adhésif 24 présente un pouvoir adhésif et une cohésion supérieurs à la cohésion de la couche intercalaire 2 et à la cohésion de la couche de masquage 15'.

On empêche ainsi une tentative de falsification du document 25 par la déchirure ou la délamination de la couche intercalaire 2 ou de la couche de masquage 15' pour retirer le dispositif électronique 8.

La sécurité contre la falsification est renforcée lorsque les couches intercalaires 2 ou de masquage 15' comportant des éléments de sécurité car, une altération de la couche intercalaire 2 et/ou la couche de masquage 15' peut entraîner une détérioration des éléments de sécurité ou la modification d'un signal optique, électrique ou magnétique susceptible d'être facilement détectée.

La structure 23 peut encore être incorporée dans un document 25', comme illustré sur la figure 6, en traitant préalablement les faces externes de la couche intercalaire 2 et de la couche de masquage 15' de manière à leur procurer des propriétés adhésives réactivables à chaud.

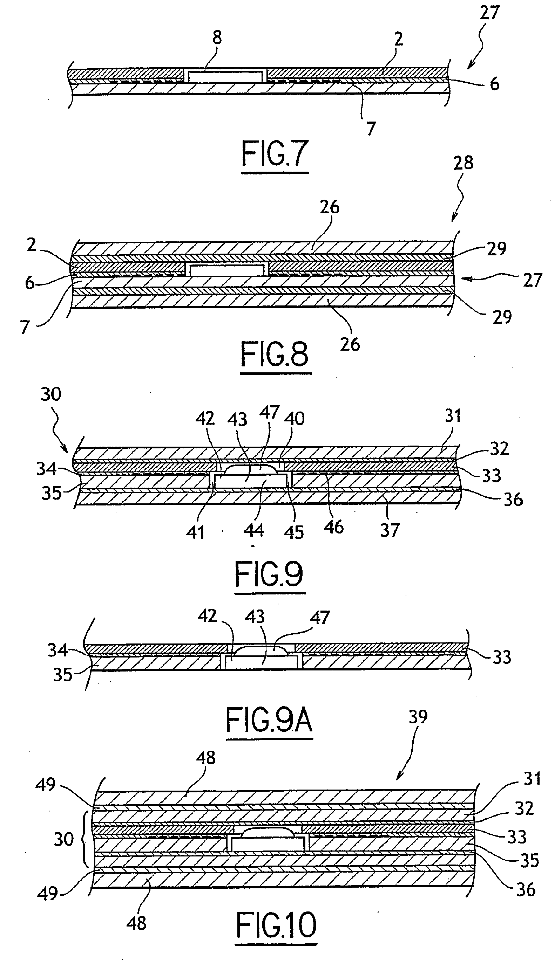

Les couches de papier 26 sont ensuite laminées à chaud sur la structure 23. On a représenté sur la figure 7 une structure 27 comportant successivement :
- une couche intercalaire 2,
- une couche d'adhésif 6,
- un support 7 du dispositif électronique 8, ce support 7 s'étendant sur toute la face inférieure de la couche intercalaire 2. L'antenne est imprimée par sérigraphie sur le support 7 et la puce logée dans la fenêtre 4.

Une telle structure 27 peut servir par exemple à la réalisation d'un document 28 de sécurité ou de valeur, comme illustré sur la figure 8.

La structure 27 peut être laminée pour être assemblée avec deux couches de papier 26 par l'intermédiaire de deux couches d'adhésif 29.

Chaque couche d'adhésif 29 se présente initialement par exemple sous la forme d'un film à transférer pris en sandwich entre deux films anti-adhérents, par exemple du type comportant une couche en papier avec un revêtement silic oné.

On ne sort pas du cadre de la présente invention lorsque le dispositif électronique est d'un type différent de celui décrit ci-dessus.

On a représenté sur la figure 9 une structure 30 comportant successivement :
- une première couche de masquage 31,
- une première couche d'adhésif 32,
- une première couche intercalaire 33 avec une première fenêtre 40,
- une deuxième couche d'adhésif 34,
- une deuxième couche intercalaire 35 avec une deuxième fenêtre 41, plus grande que la fenêtre 40,
- une troisième couche d'adhésif 36,
- une deuxième couche de masquage 37.

Un dispositif électronique 42 est logé dans les fenêtres 40 et 41.

La figure 9A représente la structure 30, sans les couches de masquage 31 et 37.

Les couches de masquage 31 et 37 comportent chacune par exemple une âme noire recouverte sur leur face externe d'un revêtement de couchage blanc apte à recevoir une impression.

Le revêtement blanc peut comporter par exemple des particules fluorescentes dites Hilites, détectables sous éclairage UV de longueur d'onde d'environ 365 nm.

Le revêtement blanc peut comporter en outre des fibres de sécurité, par exemple des fibres de sécurité à double fluorescence excitables sous rayonnement UV respectivement à 254 nm et 365 nm.

Les couches de masquage 31 et 37 peuvent également comporter, incorporés dans l'âme noire, des traceurs par exemple de type Microtag, détectables avec un dispositif de détection portable.

Les couches de masquage 31 et 37 présentent avantageusement une opacité suffisante pour rendre indétectable le dispositif électronique 42 en lumière transmise.

Les couches d'adhésif 32, 34 et 36 contiennent par exemple un adhésif de type sensible à la pression.

Les couches d'adhésif 32 et 36 peuvent être déposées préalablement sous forme liquide sur les couches de masquage 31 et 37, sur leur face interne, c'est-à-dire sur l'âme noire respective.

La couche d'adhésif 34 est par exemple initialement sous la forme d'un film de transfert.

Les couches d'adhésif 32 et 36 présentent dans l'exemple considéré une épaisseur d'environ 25 µm. La couche 34 peut avoir une épaisseur plus importante, de manière à compresser l'épaisseur de l'antenne, par exemple une épaisseur légèrement supérieure à 100 µm.

Le dispositif électronique 42 comporte par exemple un module 43 commercialisé sous la dénomination MOA4 par la société Philips.

Ce module 43 occupe une surface d'environ 42 mm² et présente une épaisseur totale de 410 µm.

Ce module 43 comporte à sa partie inférieure un circuit intégré, ou en variante plusieurs, et un circuit de connexion 44 avec des pattes de connexion 45 connectées à une antenne 46 en cuivre de type filaire, déposée sur la couche intercalaire 35, et à sa partie supérieure une résine d'encapsulage 47.

La couche intercalaire 33 est, dans l'exemple considéré, une couche fibreuse à base de fibres de cellulose, présentant une densité de 320 g/m² environ et une épaisseur de 400 µm environ.

La fenêtre 40 de cette couche intercalaire 33 reçoit la résine d'encapsulage 47 du module 43, cette résine d'encapsulage 47 présentant une épaisseur de 330 µm environ et occupant une surface d'environ 25 mm² dans l'exemple illustré.

La couche intercalaire 33 présente, dans l'exemple considéré, une couleur blanche et peut contenir des éléments de sécurité, par exemple des traceurs luminescents invisibles fluorescents jaunes, détectables avec une lampe UV de longueur d'onde de 365 nm environ.

Cette couche intercalaire 33 comporte en outre, par exemple, des traceurs détectables avec un dispositif portable par fluorescence X, ces traceurs pouvant être ceux commercialisés par la société KeyMasters Technologies.

La couche intercalaire 35 est, dans l'exemple considéré, une couche fibreuse, par exemple à base de fibres de cellulose, par exemple de couleur blanche, présentant par exemple une densité de 90 g/m² environ pour une épaisseur de 125 µm.

La fenêtre 41 de la couche intercalaire 35 reçoit le circuit de connexion 44 du module, ce circuit de connexion 44 présentant par exemple une épaisseur de 120 µm environ.

La couche intercalaire 35 peut comporter des éléments de sécurité tels que par exemple des traceurs luminescents invisibles fluo rouges détectables avec une lampe UV de longueur d'onde de 365 nm.

Dans l'exemple considéré, la couche intercalaire 35 présente une cohésion, mesurée grâce au dispositif Scott Bond, inférieure ou égale à celle de la couche intercalaire 33 et à celle des couches de masquage 31 et 37.

La couche d'adhésif 34 présente un pouvoir d'adhérence et une cohésion supérieurs à la cohésion interne des couches intercalaires 33 et 35.

On va maintenant décrire plus en détail des étapes de fabrication de la structure 30.

La couche d'adhésif 34 est initialement prise en sandwich entre deux films anti-adhérents amovibles (non représentés).

Après séparation d'un des deux films anti-adhérents, la couche d'adhésif 34 est laminée à froid sur une face de la couche intercalaire 33.

On réalise ensuite une fenêtre dans l'ensemble constitué de la couche intercalaire 33, de la couche d'adhésif 34 et du film anti-adhérent sur cette couche d'adhésif 34.

Cette fenêtre peut être réalisée avec une machine de découpe pourvue d'un emporte-pièce.

Une fenêtre est également réalisée dans la couche intercalaire 35.

On dépose l'antenne filaire 46 du dispositif électronique 42 sur une face de la couche intercalaire 35.

Le module 43 est introduit dans la fenêtre 41 de la couche intercalaire 35 de manière à ce que le circuit de connexion 44 y soit complètement logée, étant connectée par les pattes de connexion 45 à l'antenne 46. Cette connexion peut être réalisée par exemple par soudure.

Le film anti-adhérent encore présent sur la couche d'adhésif 34 est retiré.

L'ensemble constitué de la couche intercalaire 33 et de la couche d'adhésif 34 est assemblé avec la couche intercalaire 35 de manière à ce que la résine d'encapsulage 47 du module 43 soit logée dans la fenêtre 40 de la couche intercalaire 33 et que l'antenne soit prise en sandwich entre les couches intercalaires 33 et 35. La couche d'adhésif 34 peut participer au maintien de l'antenne lorsque celle-ci n'est pas imprimée mais filaire.

Enfin, les couches de masquage 31 et 37 ayant préalablement reçu les couches d'adhésif 32 et 36 sensibles à la pression sont laminées sur l'ensemble comportant les couches intercalaires 33 et 35.

La structure 30 ainsi obtenue peut recevoir par exemple une impression d'une ou de plusieurs encres, notamment une ou plusieurs encres réactives aux produits chimiques, d'une ou plusieurs encres optiquement variables et peut recevoir en outre un patch holographique.

On peut procéder également à la personnalisation de la structure au niveau des couches blanches des couches de masquage 31 et 37.

La structure 30 ainsi obtenue peut être introduite entre deux couches plastiques transparentes 48, et être laminée à chaud avec ces couches 48 par l'intermédiaire de couche d'adhésif 49, comme illustré sur la figure 10.

On obtient ainsi un document d'identité 39 sous forme d'une carte comprenant le dispositif électronique qui est prêt à l'emploi.

La structure 30 assemblée dans le document s'étend jusqu'à la tranche de ce document de sorte que les éléments de sécurité présents notamment dans les couches intercalaires 33 et 35 soient apparents sur la tranche et peuvent être détectés sur celle-ci par des moyens adaptés, ou visuellement.

Un tel document d'identité peut présenter les avantages suivants :
- sécurités d'authentification :
   - premier niveau : encre(s) optiquement variable(s), patch holographique,....
   - deuxième niveau : particules fluorescentes et fibres à double fluorescence sur les deux faces imprimées du document, effet fluorescent jaune et rouge sur la tranche du document, ...
   - troisième niveau : sécurités Microtag et KeyMaster détectables respectivement avec des équipements spécifiques, ...
- sécurités d'infalsification :
   - contre les attaches chimiques : réactifs dans les encres de sécurité à chacune des surfaces papiers du document, donnant une tache colorée visible à la surface de la carte, lors des attaques chimiques. Ces attaques chimiques peuvent survenir lors de tentatives d'ouverture des couches plastiques ou lors de tentatives d'effacement d'inscriptions présentes sur la surface imprimée du document ou encore lors de tentatives de récupération du dispositif électronique,
   - contre les attaques mécaniques : les tentatives d'enlèvement du dispositif électronique entraînent une déchirure ou une délamination de la couche intercalaire 33 et/ou de la couche intercalaire 35. Ces tentatives se traduiront aussi par une perte de fluorescence jaune et rouge au niveau de la tranche ainsi que par une modification du signal apporté soit par les traceurs KeyMaster présents dans les couches intercalaires ou par les traceurs Microtag présents dans les couches de masquage, les tentatives d'ouverture du document entraîneront une délamination des couches blanches au niveau des couches de masquage et donc un endommagement des inscriptions présentes.

De surcroît, le dispositif électronique ne se voit pas du tout, ni en transmission, ni en réflexion dans le document final, ce qui renforce l'esthétique de la carte et des impressions présentes.

On a représenté sur la figure 11 une structure 50 conforme à un autre exemple de mise en oeuvre de l'invention, et destinée à la réalisation d'un document de sécurité ou de valeur, comme on le verra par la suite.

La structure 50 comporte successivement :
- une première couche intercalaire 51 avec une première fenêtre 58,
- une première couche d'adhésif 52,
- une deuxième couche intercalaire 53 avec une deuxième fenêtre 59, plus grande que la première fenêtre 58,
- une deuxième couche d'adhésif 54, et
- une couche de masquage 55.

La première couche intercalaire 51 est par exemple une couche fibreuse à base de fibres de cellulose, avec une densité de 270 g/m² et une épaisseur de 350 µm.

La première couche intercalaire 51 est par exemple blanche, comportant des éléments de sécurité tels que par exemple des traceurs invisibles fluorescents jaunes verts de référence commerciale SC4 commercialisés par la société Angstrôm détectables visuellement avec une lampe émettant un rayonnement U.V. de longueur d'onde de 365 nm, ainsi que de manière quantitative avec un scanner commercialisé par la société Angström.

La structure 50 comporte en outre un dispositif électronique 60, de type sans contact, comportant un support 61 réalisé en matière minérale et ayant une épaisseur de 130 µm environ.

Le dispositif 60 comporte en outre une puce protégée par une résine d'encapsulage 62, celle-ci ayant par exemple une épaisseur de 330 µm environ.

Le support 61 porte une antenne 63 filaire réalisée en cuivre.

Le support 61 peut présenter par exemple une section de 4,7 cm par 12 cm.

La fenêtre 58 de la couche intercalaire 51 reçoit la résine d'encapsulage 62.

La deuxième couche intercalaire 53 est, dans l'exemple considéré, une couche fibreuse à base de fibres de cellulose avec une densité de 100 g/m² et une épaisseur de 130 µm environ, cette épaisseur étant sensiblement égale à celle du support 61.

La couche intercalaire 53 est par exemple un papier blanc, et peut comporter des éléments de sécurité tels que des traceurs luminescents SC10 invisibles fluo rouges et détectables visuellement avec une lampe UV émettant un rayonnement UV de 365 nm de longueur d'onde, ainsi que de manière quantitative avec un scanner commercialisé par la société Angström.

Dans l'exemple considéré, la couche intercalaire 51 présente une cohésion interne inférieure ou égale à celle de la couche intercalaire 53. Cette dernière présente une cohésion interne inférieure ou égale à celle de la couche de masquage 55. L'adhérence entre la première couche intercalaire 51 et la deuxième couche intercalaire 53 est supérieure à la cohésion de la couche intercalaire 51. L'adhérence entre la couche de masquage 55 et la couche intercalaire 53 est supérieure à la cohésion de la couche intercalaire 53. Les couches d'adhésifs 52 et 54 présentent un pouvoir d'adhérence et une cohésion supérieurs à la cohésion des couches intercalaires 51 et 53 et de la couche de masquage 55.

Dans l'exemple considéré, la couche de masquage 55 est noire, le colorant ou le pigment utilisé pour la coloration étant de préférence résistant à la migration dans des conditions de température et d'humidité prédéterminées, par exemple avec 80 % Humidité Relative, à 65 °C et une pression de contact par exemple inférieure à 1 Kg/cm².

Les couches d'adhésifs 52 et 54 comportent un adhésif qui est par exemple de type sensible à la pression et sont appliquées sous forme liquide. Ces couches d'adhésifs présentent par exemple une épaisseur de l'ordre de 25 µm.

On va décrire maintenant plus en détail les étapes de fabrication de la structure 50.

La couche intercalaire 51 reçoit sur sa face interne une couche d'adhésif 52 sous forme liquide.

La couche de masquage 55 reçoit également sur sa face interne une couche d'adhésif 54 sous forme liquide.

Une fenêtre est ensuite réalisée notamment à l'aide d'une machine de découpe pourvue d'un laser, dans l'ensemble constitué de la couche intercalaire 51, de la couche d'adhésif 52 et d'un film anti-adhérant rapporté sur la couche d'adhésif 52.

Une fenêtre est également réalisée dans la couche intercalaire 53.

Puis la couche intercalaire 51, après le retrait du film anti-adhérant sur la couche d'adhésif 52, sont assemblées avec le dispositif électronique 60, la couche intercalaire 53 et la couche de masquage 55, sur une machine spécifique.

Le support 61 du dispositif électronique est logé dans la fenêtre 59 de la couche intercalaire 53 et la puce avec la résine d'encapsulage 62 est logée dans la fenêtre 58 de la couche intercalaire 51.

La structure 50 ainsi obtenue peut être utilisée pour la fabrication d'un livret de passeport 80, par exemple.

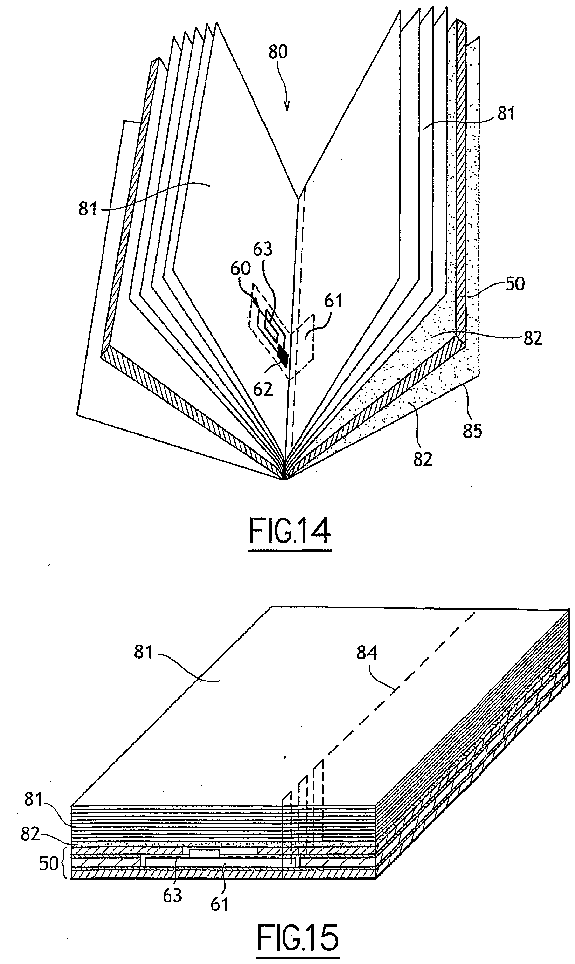

La fabrication du livret de passeport 80 peut comporter les étapes suivantes, mises en oeuvre sur une machine de montage :
- assemblage de la structure 50 avec un ensemble de feuilles 81 comprenant des pages visa et des films de sécurité, cet assemblage étant réalisé au niveau de la page de garde par le biais d'une colle liquide 82, comme illustré sur la figure 15,
- opération de couture de l'ensemble des feuilles 81 et de la structure 50 de façon centrée, la couture étant réalisée de manière à ce que l'ensemble de feuilles et une partie du support 61 du dispositif électronique 60 se retrouvent cousus ensemble, comme illustré sur la figure 15. La couture 84 est réalisée en dehors de l'antenne 63 et de la puce électronique du dispositif 60, afin de ne pas affecter le fonctionnement du dispositif électronique 60,
- assemblage de la structure et des feuilles 81 cousues avec une feuille 85 de type textile enduit d'une colle liquide 82 de manière à ce que la structure 50 soit prise en sandwich entre les feuilles en papier et la feuille en textile enduit, comme illustré à la figure 14,
- enjolivure de la couverture finale sur sa face enduite par pose de foil par transfert à chaud, et
- pliage du livret au niveau de la couture.

Le document de sécurité ainsi réalisé peut présenter les avantages suivants :
- sécurités d'infalsification contre les attaques mécaniques :
   - toute tentative d'enlèvement du dispositif électronique sera rendue très difficile puisque le dispositif électronique est cousu à l'ensemble du passeport,
   - toute tentative d'enlèvement du dispositif électronique par pelage et enlèvement du fil de couture entraîne une délamination visible de la couche intercalaire 51 ou 53 et affecte la reconnaissance de la fluorescence jaune et rouge sur la tranche de la couverture, que ce soit visuellement ou automatiquement avec le scanner Angstrom.
- sécurités d'authentifications :
- deuxième niveau : effet fluorescent jaune et rouge sur la tranche du passeport,
- troisième niveau : mesure de la signature spectrale de la fluorescence au niveau de la tranche grâce à un scanner dédié.

De surcroît, le dispositif électronique ne se voit pas ni en transmission, ni en réflexion dans la couverture du livret de passeport final.

La structure 50 peut, en variante, être incorporés dans un document de sécurité 70 en étant laminée entre deux couches de papier 71 par l'intermédiaire de deux couches d'adhésif 72, comme illustré sur la figure 12.

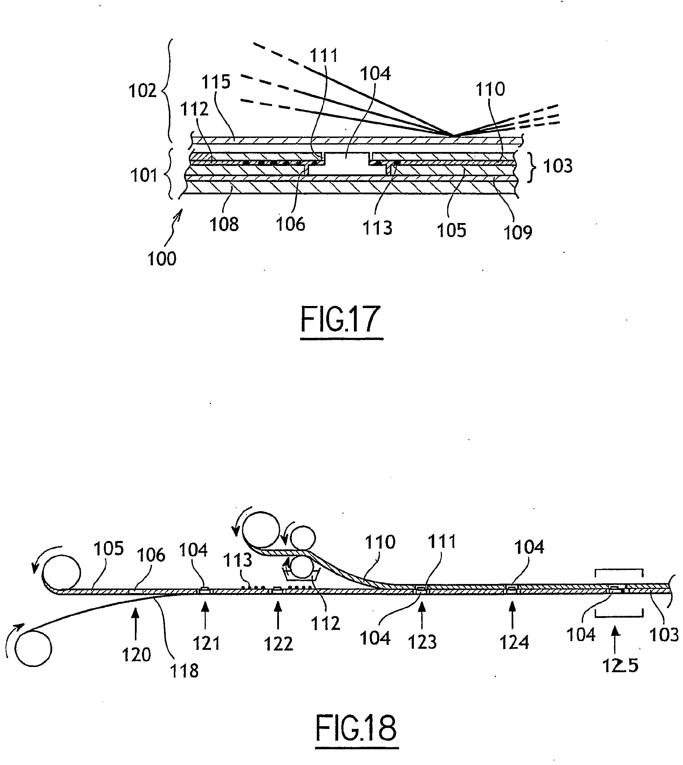

On a représenté sur la figure 17 un livret 100 tel qu'un passeport conforme à l'invention, comportant une couverture 101 et ensemble de feuilles reliées 102.

La couverture 101 comporte une structure 103 comprenant un dispositif électronique 104 et une couche intercalaire fibreuse 105 avec une fenêtre 106 dans laquelle s'étend partiellement le dispositif électronique 104.

Ce dispositif électronique 104 se présente par exemple sous la forme d'un module comprenant une puce électronique encapsulée dans une résine et fixée sur un substrat, lequel porte une antenne connectée à deux pattes de connexion de la puce électronique.

La structure décrite correspond à celle de la figure 9 mais la couche de masquage 31 est substituée par l'ensemble de feuilles reliées 102 et la couche de masquage 37 est substituée par une couche extérieure 108.

La couverture comporte en outre une couche extérieure 108 collée sur la structure 103 par l'intermédiaire d'une couche d'adhésif 109.

La couche extérieure 108 peut par exemple être réalisée en papier imprégné d'un latex et recevant un couchage en plastique. En variante, la couche extérieure 108 est réalisée en textile imprégné d'un plastique et recevant un couchage en plastique.

Dans l'exemple considéré, la structure 103 comporte une couche intercalaire fibreuse supplémentaire 110 présentant une fenêtre 111 de section plus faible que la fenêtre 106 et agencée pour recevoir partiellement le dispositif électronique 104.

Les couches intercalaires 105 et 110 sont assemblées par l'intermédiaire d'une couche d'adhésif 112, comportant par exemple une colle liquide, le dispositif électronique 104 comportant une antenne 113 déposée préalablement sur la couche 105, avant de recevoir la couche d'adhésif 112.

L'ensemble de feuilles 102 comporte une page de garde 115 collée sur la structure 103, du côté de la couche fibreuse supplémentaire 110.

Cette couche intercalaire supplémentaire 110 peut être réalisée, si on le souhaite, dans un matériau différent du papier, par exemple en polymère.

On va maintenant décrire des étapes d'un procédé de fabrication de la structure 103.

Comme illustré sur la figure 18, on commence par réaliser à l'étape 120 une fenêtre 106 dans la couche de papier 105.

Puis, à l'étape 121, le dispositif électronique 104 est amené dans la fenêtre 106 par l'intermédiaire d'une feuille de support 118 portant le dispositif électronique 104.

A l'étape 122, l'antenne 113 est posée sur la couche 105 et connectée par soudage au dispositif électronique 104.

A l'étape 123, la couche 105 est amenée au contact de la couche 110 ayant reçu préalablement une couche d'adhésif 112 appliquée par des rouleaux de transfert. Les couches 105 et 110 sont laminées de manière repérée pour faire coïncider les fenêtres.

Le dispositif électronique 104 s'étend dans les fenêtres 106 et 111 des couches 105 et 110.

A l'étape 124, la structure 103 est découpée suivant le format souhaité.

A l'étape 125, la structure 103 est soumise à une lamination sous pression et température pour permettre le durcissement et/ou la réticulation de l'adhésif.

Dans une variante de l'étape 123, la couche d'adhésif 112 est amenée sous la forme d'un film activable à chaud entre les couches 105 et 110 et l'ensemble est laminé à chaud sous pression, par exemple entre deux rouleaux ou dans une presse à plateaux.

Il est possible, dans le procédé précité, d'exposer ponctuellement la structure 103 à des ultrasons pour maintenir le prépositionnement des différents composants de cette structure 103 avant l'assemblage définitif à chaud sous pression.

La feuille de support 118 est retirée en fin de procédé.

L'assemblage de la structure 103 décrite plus haut en référence à la figure 17 ou d'autres structures réalisées conformément à l'invention avec une couverture de livret peut être effectué de différentes manières.

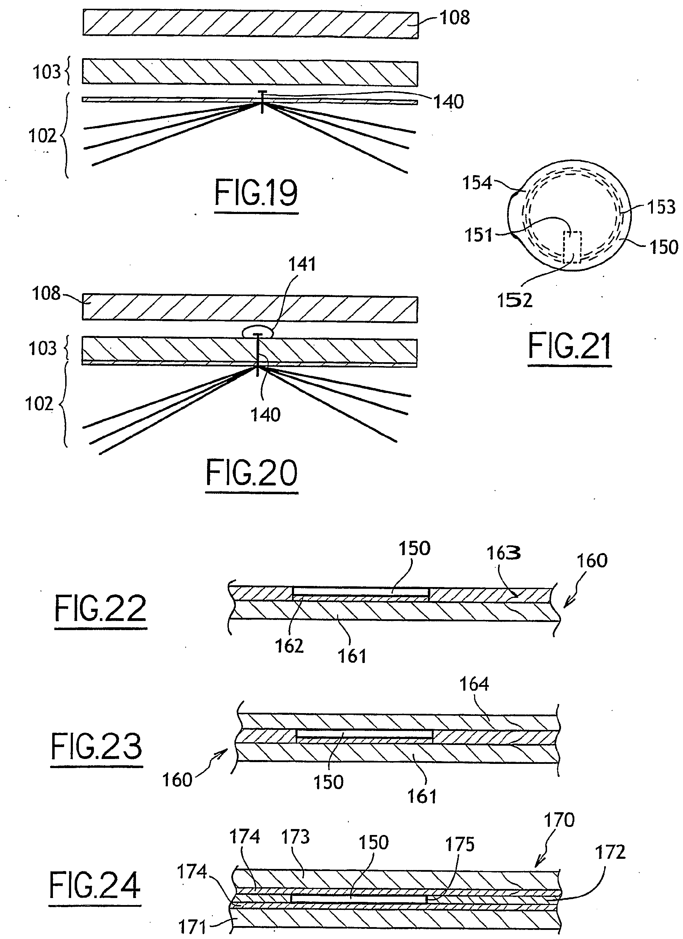

Comme illustré sur la figure 19, l'ensemble de feuilles 102 peut être assemblé avec la structure 103 avant que cette structure 103 ne soit assemblée avec la couche extérieure 108 de la couverture.

Dans l'exemple de cette figure, les feuilles 102 sont reliées à l'aide d'une couture 140, laquelle ne sert pas à solidariser les feuilles 102 au reste de la couverture.

En variante, comme illustré sur la figure 20, la couture 140 sert également à solidariser l'ensemble de feuilles 102 à la structure 103.

Le ou les fils de la couture 140 peuvent avantageusement être imprégnés d'un adhésif 141 permettant de solidariser cette couture à la couche extérieure 108.

On a représenté sur la figure 21 un insert 150 comprenant un dispositif électronique 151 pourvu d'une puce électronique 152 reliée à une antenne 153.

L'insert 150 présente, dans l'exemple considéré, une forme en disque.

La puce 152 est réalisée sur un film en matière plastique.

La puce 152 comporte des fils de connexion avec l'antenne 153.

La puce 152, les fils de connexion et l'antenne 153 peuvent être encapsulés dans une ou plusieurs résines.

L'insert 150 comporte par exemple deux couches de résine d'encapsulation externes collées et une couche centrale de résine, la résine de la portion centrale étant coulée puis durcie.

Le film en matière plastique et/ou les couches externes de résine d'encapsulation peuvent être à base de polyimide (PI) ou d'autres matériaux tels que des films en verre époxy associés à des résines. Le polyimide est un matériau à haute résistance thermique (250° C en continu), avec une excellente résistance mécanique de - 100° C à + 200° C, une bonne résistance aux chocs, une bonne résistance chimique, des propriétés d'isolant électrique satisfaisantes, et un coefficient de dilation très faible. L'une au moins des résines peut être choisie parmi une résine thermodurcissable, notamment avec un point de destruction élevé, par exemple au-delà de 400° C.

Afin d'augmenter la distance de communication entre la puce et un lecteur, il est possible d'adjoindre une antenne amplificatrice, non représentée, à l'insert 150. Cette antenne amplificatrice s'étend autour de l'antenne de la puce, en dehors de l'insert, sur la couche intercalaire.

L'insert 150 présente par exemple une épaisseur comprise entre 200 et 300 µm, par exemple d'environ 250 µm.

On a représenté sur la figure 22 une structure 160 conforme à un exemple de mise en oeuvre de l'invention, comportant une couche de masquage de papier 161 sur laquelle est collé un insert 150 tel que précité, par exemple par l'intermédiaire d'une couche 162 d'adhésif à base de matériau activable à chaud, par exemple de polyuréthane, par exemple d'épaisseur allant de 20 à 25 µm.

La structure 160 comporte en outre une couche intercalaire 163 formé par un autre film d'adhésif activable à chaud, par exemple de polyuréthane, doté d'une fenêtre, entourant l'insert 150 et présentant une épaisseur choisie de manière à compenser celle de l'insert 150 et celle de l'adhésif 162 sous-jacent.

Comme illustré sur la figure 23, la structure 160 peut comporter, si on le souhaite, une couche de masquage fibreuse 164, cette couche 164 et la couche de masquage 161 venant prendre en sandwich l'insert 150.

La structure 160, avec la couche fibreuse 164, peut présenter une épaisseur comprise par exemple entre 400 et 450 µm.

On a représenté sur la figure 24 une structure 170 conforme à un autre exemple de mise en oeuvre de l'invention, comportant deux couches de masquage fibreuses 171 et 173 prenant en sandwich une couche fibreuse intercalaire 172, à base par exemple de fibres naturelles et/ou synthétiques, par exemple de cellulose obtenue par voie humide ou sèche.

Cette couche intercalaire 172 comporte une fenêtre 175 agencée pour recevoir un insert 150, par exemple tel que défini plus haut.

Les couches 171-173 sont assemblées par l'intermédiaire de deux couches d'adhésif 174, par exemple en un matériau activable à chaud, par exemple de polyuréthane.

L'antenne amplificatrice peut être déposée entre la face intérieure de la couche de masquage 173 et l'adhésif 174 ou entre la couche de masquage 171 et l'adhésif 174 ou encore sur le document final pour autant que l'antenne amplificatrice entoure l'insert 150.

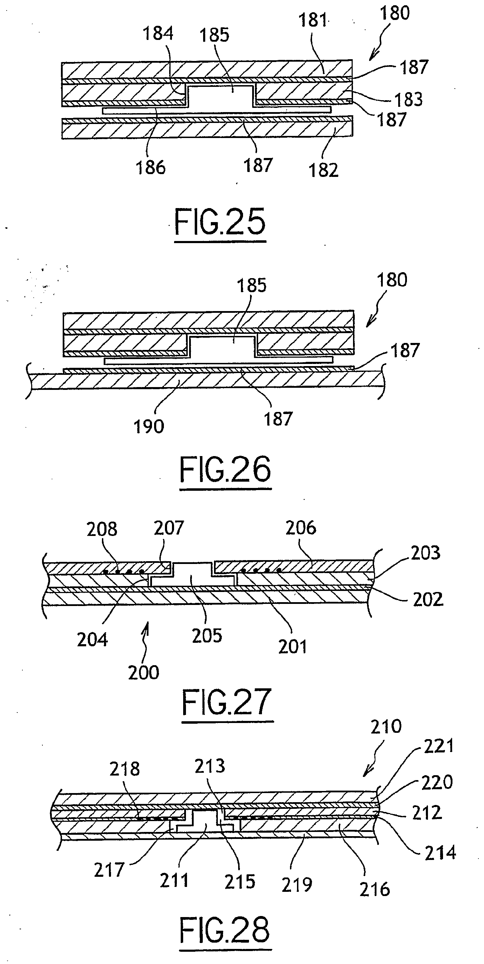

On a représenté sur la figure 25 une structure 180 conforme à un autre exemple de mise en oeuvre de l'invention, comportant deux couches extérieures de masquage de papier 181 et 182 prenant en sandwich une couche de papier intercalaire 183.

Cette dernière présente une fenêtre 184 apte à loger partiellement un dispositif électronique 185.

Celui-ci comporte un substrat 186, en dehors de la fenêtre 184, pris en sandwich entre la couche fibreuse 182 et la couche intercalaire 183.

Les différentes couches 181-183 sont assemblées entre elles par l'intermédiaire de couches d'adhésif 187 comportant par exemple un adhésif sensible à la pression.

Les couches extérieures de masquage 181 et 182 peuvent recevoir, si on le souhaite, une impression.

Comme illustré sur la figure 26, la couche de masquage 182 peut être remplacée par un support anti-adhérent 190 sur laquelle repose le dispositif électronique 185.

On a représenté sur la figure 27 une structure 200 dépourvue de couche fibreuse, comportant successivement :
- une couche de masquage 201 en matière plastique,
- une couche d'adhésif 202 activable à chaud,
- une couche intercalaire en matière plastique 203 présentant une fenêtre 204 pour recevoir partiellement un dispositif électronique 205,
- une couche d'adhésif 206 par exemple activable à chaud, sans adhésion instantanée, présentant une fenêtre 207 pour recevoir une partie du dispositif électronique 205 et dans laquelle est noyée une antenne 208 du dispositif électronique 205.

On a représenté sur la figure 28 une structure 210 comportant :
- un dispositif électronique 211,
- une première couche intercalaire 212 avec une fenêtre 213 dans laquelle s'étend au moins partiellement le dispositif électronique,
- une seconde couche intercalaire 214 ayant des propriétés adhésives par activation thermique avec une fenêtre 215 dans laquelle s'étend au moins partiellement le dispositif électronique,
- une troisième couche intercalaire 216 avec une fenêtre 217 dans laquelle s'étend au moins partiellement le dispositif électronique,
le dispositif électronique étant logé dans la cavité formée par les trois fenêtres 213, 215 et 217 assemblées de manière repérée, l'antenne 218 reposant entre la seconde et la troisième couches intercalaires.

La structure comporte également une couche d'adhésif 219 supplémentaire sur la face externe de la troisième couche intercalaire 216 pour permettre son application sur un substrat, et une couche d'adhésif 220 et une couche de masquage 221 sur la face externe de la première couche intercalaire 212 pour cacher la partie du dispositif électronique visible dans la fenêtre.

Bien entendu, l'invention n'est pas limitée aux exemples de réalisation qui viennent d'être décrits.

On peut notamment combiner entre elles des caractéristiques des différents exemples de réalisation qui viennent d'être décrits, au sein de variantes non illustrées.

Les dispositifs électroniques, par exemple les modules, peuvent se trouver dans un sens ou dans l'autre, c'est-à-dire tête en haut ou en bas, dans les structures décrites ci-dessus.

L'expression « comportant un » doit être comprise comme étant synonyme de « comportant au moins un », sauf si le contraire est spécifié.

## Revendications

1. Structure (1 ; 23 ; 27 ; 30 ; 50) destinée à la fabrication d'un document de sécurité ou de valeur, comportant :
- un dispositif électronique (8 ; 42 ; 60) permettant d'échanger des données sans contact, le dispositif électronique comportant un support (7) portant une puce électronique (10) et une antenne (11), par exemple gravée ou filaire, connectée à la puce électronique,
- une couche intercalaire (2 ; 33 ; 35 ; 51 ; 53) au moins partiellement fibreuse avec une fenêtre (4 ; 41 ; 58 ; 59) dans laquelle s'étend au moins partiellement le dispositif électronique (8; 42 ; 60), la puce électronique (10) du dispositif électronique s'étendant dans la fenêtre de la couche intercalaire,
- une couche d'adhésif (6 ; 6' ; 24 ; 32 ; 34 ; 36 ; 52 ; 54) en contact avec la couche intercalaire,
- une couche adjacente assemblée avec la couche intercalaire par l'intermédiaire de la couche d'adhésif, l'adhésif ayant un pouvoir d'adhérence et une cohérence suffisamment élevés pour qu'une tentative de séparation de la couche intercalaire de la couche adjacente altère à tout le moins la couche intercalaire, ladite couche adjacente étant une couche intercalaire supplémentaire, une couche de masquage, ou le support du dispositif électronique,
l'adhérence entre deux couches adjacentes de la structure étant supérieure à la cohésion interne de l'une au moins desdites couches.

2. Structure selon la revendication 1, **caractérisée par le fait qu'**elle comporte un film anti-adhérent amovible de protection de la couche d'adhésif.

3. Structure selon l'une des revendications précédentes, **caractérisée par le fait que** la couche intercalaire (2 ; 33 ; 35 ; 51 ; 53) est entièrement fibreuse.

4. Structure selon l'une quelconque des revendications précédentes, **caractérisée par le fait que** ladite structure comporte au moins une couche fibreuse extérieure (2 ; 31 ; 37 ; 51 ; 55) destinée à être assemblée avec une couche fibreuse du document de sécurité ou de valeur.

5. Structure selon la revendication précédente, **caractérisée par le fait que** le support (7) est flexible.

6. Structure selon l'une des deux revendications précédentes, **caractérisée par le fait que** le support (7) est réalisé en un matériau polymère PET, PVC, ABS/PC, PC, PA, PI, PE, PP.

7. Structure selon l'une des revendications 4 et 5, **caractérisée par le fait que** le support (7) est une couche fibreuse.

8. Structure selon l'une des revendications 4 et 5, **caractérisée par le fait que** le support (7) est en matériau minéral.

9. Structure selon l'une des revendications 4 et 5, **caractérisée par le fait que** le support (7) est un verre époxy.

10. Structure selon l'une quelconque des revendications 4 à 9, **caractérisée par le fait que** le support comporte sur une face un revêtement contenant un composé thermochrome irréversible.

11. Structure selon l'une quelconque des revendications 4 à 10, **caractérisée par le fait que** le support (7) est pris en sandwich entre deux couches de la structure.

12. Structure selon l'une quelconque des revendications précédentes, **caractérisée par le fait que** le dispositif électronique comporte un module avec une partie de connexion destinée à être connectée à une antenne et une puce électronique noyée dans une résine d'encapsulage.

13. Structure selon la revendication précédente, **caractérisée par le fait qu'**elle comporte une couche intercalaire supplémentaire (35 ; 53) avec une fenêtre logeant le module, la résine d'encapsulage étant logée dans la fenêtre de l'autre couche intercalaire (33 ; 51).

14. Structure selon la revendication précédente, **caractérisée par le fait que** le dispositif électronique comporte une antenne et **par le fait que** l'antenne est portée par ladite couche intercalaire supplémentaire (35).

15. Structure selon l'une quelconque des revendications précédentes, **caractérisée par le fait que** la couche d'adhésif est choisie pour permettre un assemblage à froid de la couche intercalaire avec la couche adjacente de la structure ou du document de sécurité ou de valeur.

16. Structure selon la revendication 15, **caractérisée par le fait que** l'adhésif est un adhésif sensible à la pression.

17. Structure selon l'une quelconque des revendications 1 à 14, **caractérisée par le fait que** la couche d'adhésif est choisie pour permettre un assemblage à chaud de la couche intercalaire avec la couche adjacente de la structure ou du document de sécurité ou de valeur.

18. Structure selon la revendication 17, **caractérisée par le fait que** la couche d'adhésif est activable à chaud.

19. Structure selon l'une quelconque des revendications précédentes, la structure comportant deux couches intercalaires, **caractérisée par le fait que** l'une des couches intercalaires (33 ; 35 ; 51 ; 53) présente une cohésion interne inférieure à celle de l'autre couche intercalaire.

20. Structure selon l'une quelconque des revendications précédentes, comportant une couche de masquage, **caractérisé par le fait que** la couche intercalaire (2 ; 35 ; 51 ; 53) présente une cohésion interne inférieure ou égale à celle de la couche de masquage (15 ; 31 ; 37 ; 55).

21. Structure selon l'une quelconque des revendications précédentes, **caractérisée par le fait que** la cohésion du support (7) est inférieure ou égale à celle de la couche intercalaire (2).

22. Structure selon l'une quelconque des revendications précédentes, comportant deux couches intercalaires, **caractérisée par le fait que** l'une des couches intercalaires comporte une fenêtre (40 ; 58) plus petite que celle (41 ; 59) de l'autre couche intercalaire.

23. Structure selon la revendication précédente, **caractérisée par le fait que** le dispositif électronique comporte deux portions de largeurs différentes, la portion avec la plus petite largeur étant reçue dans la plus petite fenêtre et la portion avec la plus grande largeur dans la plus grande fenêtre.

24. Structure selon la revendication précédente, **caractérisée par le fait que** la couche intercalaire avec la plus petite, respectivement la plus grande, fenêtre présente une épaisseur sensiblement égale à celle de la portion du dispositif électronique avec la plus petite, respectivement la plus grande, largeur.

25. Structure selon l'une quelconque des revendications 22 à 24, **caractérisée par le fait que** le dispositif électronique comporte une antenne, par exemple gravée ou filaire, disposée entre les deux couches intercalaires.

26. Structure selon l'une quelconque des revendications 22 à 25, **caractérisée par le fait que** le dispositif électronique comporte une antenne disposée sur la portion de plus grande largeur.

27. Structure selon l'une quelconque des revendications 22 à 26, **caractérisée par le fait qu'**elle est dépourvue d'adhésif sensible à la pression, entre les deux couches intercalaires.

28. Structure selon la revendication 1, **caractérisée par le fait qu'**elle comporte deux couches d'adhésif (15,15) sur ses faces opposées, éventuellement recouvertes chacune d'un film anti-adhérent amovible (16,16).

29. Structure selon l'une quelconque des revendications précédentes, **caractérisée par le fait que** le dispositif électronique est un dispositif RFID.

30. Document de sécurité ou de valeur (20 ; 25 ; 25' ; 28 ; 39 ; 70) comportant une structure telle que définie dans l'une quelconque des revendications précédentes.

31. Document selon la revendication 30, constituant un document d'identité, une étiquette visa, un livret de passeport.

32. Document selon l'une des revendications 30 et 31, **caractérisé par le fait que** la structure est prise en sandwich entre deux couches fibreuses, notamment en papier.

33. Procédé de fabrication d'une structure selon l'une quelconque des revendications 1 à 29, ce procédé comportant les étapes suivantes :
- fournir le dispositif électronique (8 ; 42 ; 60) permettant d'échanger des données sans contact,
- fournir la couche intercalaire (2 ; 33 ; 35 ; 51 ; 53) avec la fenêtre (4 ; 40 ; 41 ; 58 ; 59),
- déposer sur la couche intercalaire la couche d'adhésif permettant d'assembler la couche intercalaire avec la couche adjacente de la structure ou du document de sécurité ou de valeur,
- disposer le dispositif électronique au moins partiellement dans la fenêtre de la couche intercalaire.

34. Procédé selon la revendication précédente, **caractérisé par le fait qu'**il comporte les étapes suivantes :
- déposer la couche d'adhésif (6 ; 6' ; 24 ; 32 ; 36 ; 52 ; 54) sur la couche intercalaire (2 ; 33 ; 35 ; 51 ; 53),
- réaliser dans l'ensemble constitué de la couche intercalaire et de la couche d'adhésif une fenêtre, notamment à l'aide d'un emporte-pièce ou d'un laser.

35. Procédé selon l'une des deux revendications précédentes, **caractérisé par le fait qu'**il comporte les étapes suivantes :
- fournir une couche d'adhésif sous la forme d'un film à transférer, cette couche d'adhésif étant initialement recouverte par au moins un film anti-adhérent, notamment par deux films anti-adhérent sur chacune des faces de la couche d'adhésif,
- retirer le film anti-adhérent de la couche d'adhésif,
- assembler la couche d'adhésif avec la couche intercalaire.

36. Procédé selon l'une des revendications 34 et 35, **caractérisé par le fait qu'**il comporte les étapes suivantes :
- déposer sur la couche intercalaire ou sur une éventuelle couche de masquage un adhésif sous forme liquide de manière à former une couche d'adhésif,
- éventuellement recouvrir la couche d'adhésif ainsi formée d'un film anti-adhérent.

37. Procédé selon l'une quelconque des revendications 33 à 36, **caractérisé par le fait qu'**il comporte les étapes suivantes :
- fournir deux couches intercalaires (33 ; 35 ; 51 ; 53),
- réaliser séparément sur chacune des couches intercalaire au moins une fenêtre,
- déposer une couche d'adhésif sur chacune des couches intercalaires.

38. Procédé selon l'une quelconque des revendications 33 à 36, **caractérisé par le fait qu'**il comporte l'étape suivante :
- laminer à froid ou à chaud les différentes couches de la structure.

39. Procédé pour réaliser un document de sécurité ou de valeur (20 ; 25 ; 25' ; 28 ; 39 ; 70), **caractérisé par le fait qu'**il comporte les étapes suivantes :
- fournir une structure telle que définie dans l'une quelconque des revendications 1 à 29, ladite structure étant pré-assemblée,
- assembler ladite structure avec le document de sécurité ou de valeur.

40. Procédé selon la revendication précédente, **caractérisé par le fait qu'**il comporte l'étape suivante :
- laminer à froid ou à chaud la structure avec une couche du document de sécurité ou de valeur.

41. Procédé selon l'une des revendications 34 et 40, **caractérisé par le fait qu'**il comporte les étapes suivantes :
- déposer une couche d'adhésif sur la structure et/ou une couche du document de sécurité ou de valeur,
- assembler la structure avec le document de sécurité ou de valeur à l'aide de la couche d'adhésif.

42. Procédé selon l'une des revendications 39 à 41, **caractérisé par le fait qu'**il comporte les étapes suivantes :
- traiter une surface extérieure de la structure de manière à la rendre adhésive et la recouvrir éventuellement de manière temporaire d'un film anti-adhérent,
- assembler la structure avec le document de sécurité ou de valeur en mettant en contact la face traitée de la structure avec le document.

43. Procédé selon l'une quelconque des revendications 39 à 42, comportant l'étape suivante :
- coudre la structure avec au moins une feuille ou une couche du document de sécurité ou de valeur.

44. Procédé selon l'une des revendications 39 à 43, **caractérisé par le fait qu'**il comporte les étapes suivantes :
- réaliser une impression et/ou le dépôt d'un élément de sécurité sur une couche du document avant assemblage avec la structure,
- assembler la structure avec ladite couche du document.

45. Procédé selon l'une quelconque des revendications 39 à 44, **caractérisé par le fait qu'**il comporte comporter les étapes suivantes :
- assembler la structure avec une couche du document,
- puis réaliser une impression ou le dépôt d'un élément de sécurité sur ladite couche du document.

## Patentansprüche

1. Struktur (1; 23; 27; 30; 50) zur Herstellung eines Sicherheits- oder Wertdokuments, mit:
- einer elektronischen Vorrichtung (8; 42; 60), die den kontaktlosen Austausch von Daten gestattet, wobei die elektronische Vorrichtung einen Träger (7) aufweist, der einen elektronischen Chip (10) und eine Antenne (11) trägt, die zum Beispiel geätzt oder verdrahtet ist und mit dem elektronischen Chip verbunden ist,
- einer Zwischenlagenschicht (2; 33; 35; 51; 53), die mindestens teilweise faserig ist, mit einem Fenster (4; 41; 58; 59), in das sich mindestens teilweise die elektronische Vorrichtung (8; 42; 60) erstreckt, wobei der elektronische Chip (10) der elektronischen Vorrichtung sich in das Fenster der Zwischenlagenschicht erstreckt,
- einer Klebstoffschicht (6; 6'; 24; 32; 34; 36; 52; 54) in Kontakt mit der Zwischenlagenschicht,
- einer benachbarten Schicht, die mit der Zwischenlagenschicht mittels der Klebstoffschicht gefügt ist, wobei der Klebstoff ein Adhäsionsvermögen und eine Kohäsion hat, die ausreichend hoch sind, damit ein Versuch, die Zwischenlagenschicht von der Klebstoffschicht zu trennen, zumindest die Zwischenlagenschicht beschädigt, wobei die benachbarte Schicht eine zusätzliche Zwischenlagenschicht, eine Maskierungsschicht oder der Träger der elektronischen Vorrichtung ist,
wobei die Adhäsion zwischen zwei benachbarten Schichten der Struktur größer ist als die innere Kohäsion der mindestens einen der Schichten.

2. Struktur nach Anspruch 1, **dadurch gekennzeichnet, dass** sie eine entfernbare Antihaft-Folie zum Schutz der Klebstoffschicht aufweist.

3. Struktur nach einem der vorhergehenden Ansprüche, **dadurch gekennzeichnet, dass** die Zwischenlagenschicht (2; 33; 35; 51; 53) gänzlich faserig ist.

4. Struktur nach einem der vorhergehenden Ansprüche, **dadurch gekennzeichnet, dass** die Struktur mindestens eine äußere Faserschicht (2; 31; 37; 51; 55) aufweist, die für das Zusammenfügen mit einer Faserschicht des Sicherheits- oder Wertdokuments bestimmt ist.

5. Struktur nach dem vorhergehenden Anspruch, **dadurch gekennzeichnet, dass** der Träger (7) flexibel ist.

6. Struktur nach einem der zwei vorhergehenden Ansprüche, **dadurch gekennzeichnet, dass** der Träger aus einem PET-, PVC-, ABS/PC-, PC-, PA-, PI-, PE-, PP-Polymermaterial ist.

7. Struktur nach einem der Ansprüche 4 und 5, **dadurch gekennzeichnet, dass** der Träger (7) eine Faserschicht ist.

8. Struktur nach einem der Ansprüche 4 und 5, **dadurch gekennzeichnet, dass** der Träger (7) aus einem mineralischen Werkstoff ist.

9. Struktur nach einem der Ansprüche 4 und 5, **dadurch gekennzeichnet, dass** der Träger (7) ein Epoxidglas ist.

10. Struktur nach einem der Ansprüche 4 bis 9, **dadurch gekennzeichnet, dass** der Träger auf einer Seite eine Bedeckung aufweist, die eine irreversible thermochrome Verbindung enthält.

11. Struktur nach einem der Ansprüche 4 bis 10, **dadurch gekennzeichnet, dass** der Träger (7) zwischen zwei Schichten der Struktur sandwichartig in Eingriff genommen ist.

12. Struktur nach einem der vorhergehenden Ansprüche, **dadurch gekennzeichnet, dass** die elektronische Vorrichtung ein Modul mit einem Verbindungsteil aufweist, der für die Verbindung mit einer Antenne und einem elektronischen Chip, der in einem Einkapselungsharz eingebettet ist, bestimmt ist.

13. Struktur nach dem vorhergehenden Anspruch, **dadurch gekennzeichnet, dass** sie eine zusätzliche Zwischenlagenschicht (35; 53) mit einem Fenster für die Aufnahme des Moduls aufweist, wobei das Einkapselungsharz in dem Fenster der anderen Zwischenlagenschicht (33; 51) aufgenommen ist.

14. Struktur nach dem vorhergehenden Anspruch, **dadurch gekennzeichnet, dass** die elektronische Vorrichtung eine Antenne aufweist, und dadurch, dass die Antenne von der zusätzlichen Zwischenlagenschicht (35) getragen wird.

15. Struktur nach einem der vorhergehenden Ansprüche, **dadurch gekennzeichnet, dass** die Klebstoffschicht gewählt ist, um eine Kaltfügung der Zwischenlagenschicht mit der benachbarten Schicht der Struktur oder des Sicherheits- oder Wertdokuments zu gestatten.

16. Struktur nach Anspruch 15, **dadurch gekennzeichnet, dass** der Klebstoff ein druckempfindlicher Klebstoff ist.

17. Struktur nach einem der Ansprüche 1 bis 14, **dadurch gekennzeichnet, dass** die Klebstoffschicht gewählt ist, um eine Warmfügung der Zwischenlagenschicht mit der benachbarten Schicht der Struktur oder des Sicherheits- oder Wertdokuments zu gestatten.

18. Struktur nach Anspruch 17, **dadurch gekennzeichnet, dass** die Klebstoffschicht warmaktivierbar ist.

19. Struktur einem der vorhergehenden Ansprüche, wobei die Struktur zwei Zwischenlagenschichten aufweist, **dadurch gekennzeichnet, dass** die eine der Zwischenlagenschichten (33; 35; 51; 53) eine innere Kohäsion aufweist, die kleiner als die der anderen Zwischenlagenschicht ist.

20. Struktur einem der vorhergehenden Ansprüche, mit einer Maskierungsschicht, **dadurch gekennzeichnet, dass** die Zwischenlagenschicht (2; 35; 51; 53) eine innere Kohäsion aufweist, die kleiner oder gleich der der Maskierungsschicht (15; 31; 37; 55) ist.

21. Struktur nach einem der vorhergehenden Ansprüche, **dadurch gekennzeichnet, dass** die Kohäsion des Trägers (7) kleiner oder gleich der der Zwischenlagenschicht (2) ist.

22. Struktur einem der vorhergehenden Ansprüche, mit zwei Zwischenlagenschichten, **dadurch gekennzeichnet, dass** die eine der Zwischenlagenschichten ein Fenster (40; 58) aufweist, das kleiner als das Fenster (41; 59) der anderen Zwischenlagenschicht ist.

23. Struktur nach dem vorhergehenden Anspruch, **dadurch gekennzeichnet, dass** die elektronische Vorrichtung zwei Teile unterschiedlicher Breite aufweist, wobei der Teil mit der kleinsten Breite in dem kleinsten Fenster und der Teil mit der größten Breite in dem größten Fenster aufgenommen ist.

24. Struktur nach dem vorhergehenden Anspruch, **dadurch gekennzeichnet, dass** die Zwischenlagenschicht mit dem kleinsten bzw. mit dem größten Fenster eine Dicke aufweist, die im Wesentlichen gleich der des Teils der elektronischen Vorrichtung mit der kleinsten bzw. mit der größten Breite ist.

25. Struktur nach einem der Ansprüche 22 bis 24, **dadurch gekennzeichnet, dass** die elektronische Vorrichtung eine Antenne aufweist, die zum Beispiel geätzt oder verdrahtet ist und zwischen den zwei Zwischenlagenschichten angeordnet ist.

26. Struktur nach einem der Ansprüche 22 bis 25, **dadurch gekennzeichnet, dass** die elektronische Vorrichtung eine Antenne aufweist, die auf dem Teil mit der größten Breite angeordnet ist.

27. Struktur nach einem der Ansprüche 22 bis 26, **dadurch gekennzeichnet, dass** sie zwischen den zwei Zwischenlagenschichten keine druckempfindliche Klebstoffschicht aufweist.

28. Struktur nach Anspruch 1, **dadurch gekennzeichnet, dass** sie zwei Klebstoffschichten (15, 15) auf ihren entgegengesetzten Seiten aufweist, die gegebenenfalls jede mit einer entfernbaren Antihaft-Folie (16, 16) bedeckt sind.

29. Struktur nach einem der vorhergehenden Ansprüche, **dadurch gekennzeichnet, dass** die elektronische Vorrichtung eine RFID-Vorrichtung ist.

30. Sicherheits- oder Wertdokument (20; 25; 25'; 28; 39; 70) mit einer Struktur nach einem der vorhergehenden Ansprüche.

31. Dokument nach Anspruch 30, das ein Identitätsdokument, ein Visumetikett, ein Reisepassbüchlein bildet.

32. Dokument nach einem der Ansprüche 30 und 31, **dadurch gekennzeichnet, dass** die Struktur zwischen zwei Faserschichten, insbesondere aus Papier, sandwichartig in Eingriff genommen ist.

33. Verfahren zum Herstellen einer Struktur nach einem der Ansprüche 1 bis 29, wobei dieses Verfahren die folgenden Schritte umfasst:
- Bereitstellen der elektronischen Vorrichtung (8; 42; 60), die den kontaktlosen Austausch von Daten gestattet,
- Bereitstellen der Zwischenlagenschicht (2; 33; 35; 51; 53) mit dem Fenster (4; 40;41; 58; 59),
- Aufbringen, auf der Zwischenlagenschicht, der Klebstoffschicht, die das Fügen der Zwischenlagenschicht mit der benachbarten Schicht der Struktur oder des Sicherheits- oder Wertdokuments gestattet,
- Anordnen der elektronischen Vorrichtung mindestens teilweise in dem Fenster der Zwischenlagenschicht.

34. Verfahren nach dem vorhergehenden Anspruch, **dadurch gekennzeichnet, dass** es die folgenden Schritte aufweist:
- Aufbringen der Klebstoffschicht (6; 6'; 24; 32; 36; 52; 54) auf der Zwischenlagenschicht (2; 33; 35; 51; 53),
- Realisieren eines Fensters in der aus der Zwischenlagenschicht und der Klebstoffschicht gebildeten Anordnung, insbesondere mit Hilfe eines Lochstanzers oder eines Lasers.

35. Verfahren nach einem der zwei vorhergehenden Ansprüche, **dadurch gekennzeichnet, dass** es die folgenden Schritte aufweist:
- Bereitstellen einer Klebstoffschicht in Form einer Transferfolie, wobei diese Klebstoffschicht anfänglich mit mindestens einer Antihaft-Folie bedeckt ist, insbesondere mit zwei Antihaft-Folien auf jeder der Seiten der Klebstoffschicht,
- Abziehen der Antihaft-Folie von der Klebstoffschicht,
- Fügen der Klebstoffschicht mit der Zwischenlagenschicht.

36. Verfahren nach einem der Ansprüche 34 und 35, **dadurch gekennzeichnet, dass** es die folgenden Schritte aufweist:
- Aufbringen auf der Zwischenlagenschicht oder einer etwaigen Maskierungsschicht eines Klebstoffs in flüssiger Form, so dass eine Klebstoffschicht gebildet wird,
- gegebenenfalls Bedecken der so gebildeten Klebstoffschicht mit einer Antihaft-Folie.

37. Verfahren nach einem der Ansprüche 33 bis 36, **dadurch gekennzeichnet, dass** es die folgenden Schritte aufweist:
- Bereitstellen von zwei Zwischenlagenschichten (33; 35; 51; 53),
- Realisieren mindestens eines Fensters auf jeder der Zwischenlagenschichten getrennt,
- Aufbringen einer Klebstoffschicht auf jeder der Zwischenlagenschichten.

38. Verfahren nach einem der Ansprüche 33 bis 36, **dadurch gekennzeichnet, dass** es den folgenden Schritt aufweist:
- Kalt- oder Warmlaminieren der unterschiedlichen Schichten der Struktur.

39. Verfahren zum Realisieren eines Sicherheits- oder Wertdokuments (20; 25; 25'; 28; 39; 70), **dadurch gekennzeichnet, dass** es die folgenden Schritte aufweist:
- Bereitstellen einer Struktur nach einem Ansprüche 1 bis 29, wobei die Struktur vorgefügt ist, Fügen der Struktur mit dem Sicherheits- oder Wertdokument.

40. Verfahren nach dem vorhergehenden Anspruch, **dadurch gekennzeichnet, dass** es den folgenden Schritt aufweist:
- Kalt- oder Warmlaminieren der Struktur mit einer Schicht des Sicherheits- oder Wertdokuments.

41. Verfahren nach einem der Ansprüche 34 und 40, **dadurch gekennzeichnet, dass** es die folgenden Schritte aufweist:
- Aufbringen einer Klebstoffschicht auf der Struktur und/oder einer Schicht des Sicherheits- oder Wertdokuments,
- Fügen der Struktur mit dem Sicherheits- oder Wertdokument mit Hilfe der Klebstoffschicht.

42. Verfahren nach einem der Ansprüche 39 bis 41, **dadurch gekennzeichnet, dass** es die folgenden Schritte aufweist:
- Behandeln einer äußeren Oberfläche der Struktur, so dass sie haftend wird, und gegebenenfalls vorübergehendes Bedecken dieser mit einer Antihaft-Folie,
- Fügen der Struktur mit dem Sicherheits- oder Wertdokument, indem die behandelte Seite der Struktur mit dem Dokument in Kontakt gebracht wird.

43. Verfahren nach einem der Ansprüche 39 bis 42, aufweisend den folgenden Schritt:
- Broschieren der Struktur mit mindestens einem Blatt oder einer Schicht des Sicherheits- oder Wertdokuments.

44. Verfahren nach einem der Ansprüche 39 bis 43, **dadurch gekennzeichnet, dass** es die folgenden Schritte aufweist:
- Realisieren eines Drucks und/oder des Aufbringens eines Sicherheitselements auf einer Schicht des Dokuments vor dem Fügen mit des Struktur,
- Fügen der Struktur mit der Schicht des Dokuments.

45. Verfahren nach einem der Ansprüche 39 bis 44, **dadurch gekennzeichnet, dass** es die folgenden Schritte aufweist:
- Fügen der Struktur mit einer Schicht des Dokuments,
- und dann Realisieren eines Drucks oder des Aufbringens eines Sicherheitselements auf der Schicht des Dokuments.

## Claims

1. A structure (1; 23; 27; 30; 50) for fabricating a security document or a document of value, comprising:
- an electronic device (8; 42; 60) enabling data to be exchanged without contact, the electronic device comprises a support (7) carrying an electronic chip (10) and an antenna (11), for example engraved or wired, connected to the electronic chip,
- an inset layer (2; 33; 35; 51; 53) made at least in part out of fiber, and having a window (4; 41; 58; 59) within which the electronic device (8 ; 42 ; 60) extends, at least in part, the electronic chip (10) of the electronic device extending in the window of the inset layer.;
- an adhesive layer (6; 6'; 24; 32; 34; 36; 52; 54) in contact with the inset layer;
- an adjacent layer assembled with the inset layer via the adhesive layer, the adhesive presenting adhesive power and coherence that are sufficiently high so that any attempt at separating the inset layer from the adjacent layer spoils at least the inset layer, the adjacent layer being an additional inset layer, a masking layer, or the support of the electronic device,
the adhesion between two adjacent layers of the structure being stronger than the internal cohesion of at least one of said layers.

2. A structure according to claim 1, **characterized in that** the structure includes a removable anti-adhesive film for protecting the adhesive layer.

3. A structure according to any one of previous claims, **characterized in that** the inset layer (2; 33; 35; 51; 53) is made entirely of fiber.

4. A structure according to any one of previous claims, **characterized in that** the structure includes at least one outer fiber layer (2; 31; 37; 51; 55) for being assembled to a fiber layer of the security document or document of value.

5. A structure according to the previous claims, **characterized in that** the support (7) is flexible.

6. A structure according to any one of the two previous claims, **characterized in that** the support (7) is made of a polymer material selected among PET, PVC, ABS/PC, PC, PA, PI, PE, PP.

7. A structure according to any one of claims 4 and 5, **characterized in that** the support (7) is a fiber layer.

8. A structure according to any one of claims 4 and 5, **characterized in that** the support (7) is made of mineral material.

9. A structure according to any one of claims 4 and 5, **characterized in that** the support (7) is made of epoxy glass.

10. A structure according to any one of claims 4 to 9, **characterized in that** the support has a face with a coating containing an irreversible thermochromic compound.

11. A structure according to any one of claims 4 to 10, **characterized in that** the support (7) is sandwiched between two layers of the structure.

12. A structure according to any one of previous claims, **characterized in that** the electronic device (8 ; 42 ; 60) comprises a module with a connection portion for connection to an antenna and an electronic chip embedded in an encapsulating resin.

13. A structure according to previous claim, **characterized in that** the structure includes an additional inset layer (35; 53) with a window housing the module, the encapsulating resin being housed in the window of the other inset layer.

14. A structure according to previous claim, **characterized in that** the electronic device includes an antenna, and wherein the antenna is carried by said additional inset layer (35).

15. A structure according to any one of previous claims, **characterized in that** the adhesive layer enables the inset layer to be assembled cold with an adjacent layer of the structure or the security document or the document of value.

16. A structure according to claim 15, **characterized in that** the adhesive is a pressure-sensitive adhesive.

17. A structure according to any one of claims 1 to 14, **characterized in that** the adhesive layer enables the inset layer to be assembled hot with an adjacent layer of the structure or the security document or the document of value.

18. A structure according to claim 17, **characterized in that** the adhesive layer is hot-activatable.

19. A structure according to any one of previous claims, the structure comprising two inset layers, **characterized in that** one of the inset layers (33, 35, 51, 53) presents internal cohesion that is less than that of the other inset layer.

20. A structure according to any one of previous claims, including a masking layer, **characterized in that** the inset layer (2; 35; 51; 53) presents internal cohesion that is less than or equal to the internal cohesion of the masking layer (15; 31; 37; 55).

21. A structure according to any one of previous claims, **characterized in that** the cohesion of the support (7) is less than or equal to the cohesion of the inset layer (2).

22. A structure according to any one of previous claims, having two inset layers, **characterized in that** one of the inset layers includes a window (40, 58) that is smaller than the window (41, 59) of the other inset layer.

23. A structure according to the previous claim, **characterized in that** the electronic device includes two portions of different widths, the portion of smaller width being received in the smaller window and the portion of greater width being received in the larger window.

24. A structure according to the previous claim, **characterized in that** the inset layer with the smaller, respectively with the larger, window presents thickness substantially equal to that of the portion of the electronic device having the smaller, respectively the greater, width.

25. A structure according to any one of claims 22 to 24, **characterized in that** the electronic device includes an antenna disposed between the two inset layers.

26. A structure according to any one of claims 22 to 25, **characterized in that** the electronic device includes an antenna disposed on the portion of greater width.

27. A structure according to any one of claims 22 to 26, **characterized in that** the structure does not include pressure-sensitive adhesive between the two inset layers.

28. A structure according to claim 1, **characterized in that** the structure includes two adhesive layers (15) on its opposite faces, eventually each one being covered by a removable anti-adhesive film.

29. A structure according to any one of previous claims, **characterized in that** the electronic device is a RFID device.

30. A security document or a document of value (20; 25; 25'; 28; 39; 70) including a structure as defined in any one of previous claims.

31. A document according to claim 30, constituting an identity document, a visa label, or a passport booklet.

32. A document according to any one of claims 30 and 31, **characterized in that** the structure is sandwiched between two fiber layers, especially in paper.

33. A process for fabricating a structure according to any one of claims 1 to 29, the process comprising the steps of:
- supplying the electronic device (8; 42; 60) enabling data to be exchanged without contact;
- supplying the inset layer (2; 33; 35; 51; 53) with the window (4; 40; 41; 58; 59);
- placing on the inset layer the adhesive layer enabling the inset layer to be assembled with an adjacent layer of the structure or of the security document or document of value,
- placing the electronic device at least in part in the window in the inset layer.

34. A process according to the previous claim, **characterized by** the fact that it includes the following steps:
- depositing the adhesive layer (6; 6'; 24; 32; 36;52; 54) on the inset layer (2; 33; 35; 51; 53); and
- making a window in the assembly constituted by the inset layer and the adhesive layer, in particular with the help of a die or a laser.

35. A process according to any one of the two previous claims, **characterized by** the fact that it includes the following steps:
- providing an adhesive layer in the form of a film for transfer, said adhesive layer initially being covered in at least one anti-adhesive film, and in particular by two anti-adhesive films each on a respective face of the adhesive layer;
- removing the anti-adhesive film from the adhesive layer;
- assembling the adhesive layer with the inset layer.

36. A process according to any one of the claims 34 and 35, **characterized by** the fact that it includes the following steps:
- depositing an adhesive in liquid form on the inset layer or on an optional masking layer so as to form an adhesive layer; and
- optionally covering the adhesive layer as formed in this way in an anti-adhesive film.

37. A process according to any one of the claims 33 to 36, **characterized by** the fact that it includes the following steps:
- supplying two inset layers (33; 35; 51; 53);
- separately forming at least one window in each of the inset layers; and
- depositing an adhesive layer on each of the inset layers.

38. A process according to any one of the claims 33 and 36, **characterized by** the fact that it includes the following step:
- bonding the various layers of the structure together by cold or hot-lamination.

39. A process of making a security document or a document of value (20; 25; 25'; 28; 39; 70), **characterized by** the fact that it comprises the following steps:
- providing a structure as defined in any one of claims 1 to 29, said structure being preassembled;
- assembling said structure with the security document or document of value.

40. A process according to the previous claim, **characterized by** the fact that it includes the following step:
- bonding together the structure and a layer of the security document or the document of value by cold or hot-lamination.

41. A process according to any one of the claims 34 and 40, **characterized by** the fact that it includes the following steps:
- depositing an adhesive layer on the structure and/or a layer of the security document or document of value;
- assembling the structure together with the security document or document of value with the help of the adhesive layer.

42. A process according to any one of claims 39 and 41, **characterized by** the fact that it includes the following steps:
- treating an outside surface of the structure in such a manner as to make it adhesive and optionally covering it temporarily in an anti-adhesive film;
- assembling the structure with the security document or document of value by putting the treated face of the structure into contact with the document.

43. A process according to any one of claims 39 and 42, including the following step:
- sewing the structure to at least one sheet or layer of the security document or document of value.

44. A process according to any one of claims 39 to 43, **characterized by** the fact that it includes the following steps:
- making a security print and/or depositing a security element on a layer of the document prior to assembling the document with the structure; and
- assembling the structure with said layer of the document.

45. A process according to any one of claims 39 to 44, **characterized by** the fact that it includes the following steps:
- assembling the structure with a layer of the document;
- then making a security print or depositing a security element on said layer of the document.
